# EUROPEAN PATENT APPLICATION

(11) **EP 2 269 908 A1**
(43) Date of publication of application: **05.01.2011**
(21) Application number: 09164202.5
(22) Date of filing: 30.06.2009
(51) Int. Cl.: B64D 1/00, F03D 1/00

(54) **Wind turbine generator airship flying concept**

(71) Applicant: Vestas Wind Systems A/S, 8940 Randers - SV (DK)
(72) Inventor: Thomsen, Mads Bækgaard, DK-2200, Copenhagen N (DK); Kirt, Rune, DK-2100, Copenhagen Ø (DK); Galbraith, Duncan, Argyll, PA28 6AH (GB)
(74) Representative: Plougmann & Vingtoft A/S

(57) **Abstract**

The invention relates to a method for handling at least one piece of equipment for installing a wind turbine generator component. The method comprises the steps of loading said at least one wind turbine generator component to an airship at a site of loading, transporting the airship with the at least one piece of equipment from the site of loading of the at least one piece of equipment to the site of unloading the at least one piece of equipment, and unloading said at least one piece of equipment from the airship at the site of unloading. The invention also relates to use of an airship for performing the method according to the invention.

## Description

### FIELD OF THE INVENTION

The invention relates to a method for handling pieces of equipment for installing a wind turbine generator, and in particular to a method for handling one or more wind turbine generator components. The invention also relates to a use of an airship.

### BACKGROUND OF THE INVENTION

The inventor of the present invention has appreciated that an improved method of handling pieces of equipment for installing a wind turbine generator is of benefit, and has in consequence devised the present invention.

Installing a wind turbine generator comprises different pieces of equipment and different steps of transportation. The pieces of equipment can be wind turbine generator components themselves including sub stations for supplying the electrical energy to a grid, or the pieces of equipment can be equipment associated with installing a wind turbine generator such as mobile cranes or other installation equipment needed at a site of installation or at another site.

Cranes are widely used for installation of wind turbine generators, either land-based mobile cranes or stationary cranes, or sea-based barge cranes, or even airborne helicopters used as cranes. Vehicles and vessels are also used for installation of wind turbine generators, including trucks, trains, ships and aircrafts, namely for transporting pieces of equipment from a site of loading to a site of unloading.

Common to the different vessels and vehicles used for installation of a wind turbine generator is that the vessels or vehicles often are very expensive to use and/or require roads, harbours, airports, or railway stations for loading and unloading the pieces of equipment and/or require sufficiently widespread and stabile roads or railways between the site of loading and the site of unloading.

### SUMMARY OF THE INVENTION

It may be seen as an object of the present invention to provide an improved method for handling pieces of equipment for installing a wind turbine generator.

The objects and advantages of the invention may be obtained by a method for handling at least one piece of equipment for installing a wind turbine generator component, said method comprising the steps of
- loading said at least one wind turbine generator component to an airship at a site of loading, said site of loading being different than a site of unloading the at least on piece of equipment for installing
- transporting the airship with the at least one piece of equipment from the site of loading of the at least one piece of equipment to the site of unloading the at least one piece of equipment
- unloading said at least one piece of equipment from the airship at the site of unloading.

Transporting, by means of an airship, the at least one piece of equipment from the site of loading of the at least one piece of equipment to the site of unloading has the advantage that airships need not roads, railways or airstrips to land and take off.

According to an aspect of the invention, said handling is one of the following operations: transporting at least one piece of equipment, installing at least one piece of equipment, or servicing at least one piece of equipment.

Transporting and/or installing and/or servicing by use of an airship may have the advantage that airships are capable of operating at ground, in the air or at the sea, and/or may have the advantage of using the one and same vessel, i.e. the airship, for more than one operation.

According to an aspect of the invention, the site of loading onto the airship is one of the following sites: a site of manufacturing the at least one wind turbine component, a harbour for unloading wind turbine components from a ship, a storage area for unloading wind turbine components from a truck, an airfield for unloading wind turbine components from an aeroplane, a railway station for unloading wind turbine components from a train, or a nacelle of a wind turbine.

The site of loading may be any site of handling, where wind turbine generator components are situated during transport between and including the site of manufacturing and the site of installation. Airships need not roads, railways or airstrips to land and take off.

According to an aspect of the invention, the site of loading is one of the flowing geographical locations: a field, a mountain side, a roof-top of a land-based building, a land-based pylon, an off-shore pylon, an off-shore platform, an off-shore oil drilling rig, a jetty, a breakwater, or a water powered off-shore plant.

According to an aspect of the invention, the site of loading is one of the following vessels or vehicles: a truck, a crane, a train, ,a ship, or a barge.

The site of loading may be any vessel or vehicle where wind turbine generator components are situated during transport between and including the site of manufacturing and the site of installation. Airships need not roads, railways or airstrips to land and take off.

The possibilities and advantages described above with respect to the site of loading apply equally to the site of unloading.

To this end, according to an aspect of the invention, the site of unloading from the airship is one of the following sites: a site of installation of the at least one wind turbine component, a harbour for loading wind turbine components from a ship, a storage area for loading wind turbine components from a truck, an airfield for loading wind turbine components from an aeroplane, a railway station for unloading wind turbine components from a train, or a nacelle of a wind turbine.

The site of unloading may be any site of handling, where wind turbine generator components are situated during transport between and including the site of manufacturing and the site of installation. Airships need not roads, railways or airstrips to land and take off.

According to an aspect of the invention, the site of unloading is one of the flowing geographical locations: a field, a mountain side, a roof-top of a land-based building, a land-based pylon, an off-shore pylon, an off-shore platform, an off-shore oil drilling rig, a jetty, a breakwater, or a water powered off-shore plant.

According to an aspect of the invention, the site of loading is one of the following vessels or vehicles: a truck, a crane, a train, a ship, or a barge.

The site of unloading may be any vessel or vehicle where wind turbine generator components are situated during transport between and including the site of manufacturing and the site of installation. Airships need not roads, railways or airstrips to land and take off.

According to an aspect of the invention, the at least one piece of equipment is one or more of the following wind turbine generator components: a complete wind turbine generator, a wind turbine blade, a wind turbine tower section, a complete wind turbine tower, a wind turbine nacelle, a wind turbine hub, a wind turbine foundation, a generator, a wind turbine gear box, a wind turbine transformer, a wind turbine rectifier, a wind turbine inverter, a wind turbine bunny comprised of the hub and two wind turbine blades extending obliquely upwards, or one or more moulds for producing wind turbine components such as wind turbine blades.

Pieces of equipment to be handled by the airship being wind turbine generator components may have the advantage of the different components of a wind turbine generator being a complete wind turbine generator itself or the component being part of an entire wind turbine generator is that the component may be transported irrespective of the size and/or configuration of the component.

According to an aspect of the invention, the method comprises the steps of
- enclosing, fully or partly, said at least one piece of equipment into at least one frame at a site of packaging, said at least one frame being provided with an attachment mechanism,
- loading said at least one piece of equipment to an airship at a site of loading by attaching said at least one frame by means of a complementary attachment mechanism of a lifting device of the airship
- transporting the airship with the at least one piece of equipment enclosed in said at least one frame from the site of loading of the at least one piece of equipment to a site of unloading,
- unloading said at least one frame with from the cargo platform of the airship at the site of unloading with said at least one piece of equipment component being enclosed in the at least one frame.

Enclosing, fully or partly, said at least one piece of equipment into at least one frame and attaching said at least one frame by means of a complementary attachment mechanism of a lifting device of the airship may have the advantage of the piece of equipment being capable of being transported using a unified cargo system, at least suitable for lifting device of the airship, and without having to attach the equipment as such to the lifting device. The lifting device may be a cargo platform or another type of lifting device of the airship.

According to an aspect of the invention, the method comprises the steps of
- positioning an airship with a major axis or major plane of the airship directed upwards, said positioning being performed at one of the following sites or situations: before loading of the at least one piece of equipment to the airship at a site of loading, during transport of the at least one piece of equipment between the site of loading and a site of unloading, or before unloading of the at least one piece of equipment from the airship at the site of unloading

According to the aspect of positioning the airship with a major axis or major plane of the airship directed upwards, loading of said at least one piece of equipment may be performed to the airship directed upwards at a site of loading, said site of loading being different than a site of unloading the at least one piece of equipment

According to the aspect of positioning the airship with a major axis or major plane of the airship directed upwards, transporting may be performed with the airship directed upwards with the at least one piece of equipment from the site of loading of the at least one piece of equipment to the site of unloading the at least one piece of equipment,

According to the aspect of positioning the airship with a major axis or major plane of the airship directed upwards, unloading of said at least one piece of equipment may performed from the airship directed upwards at the site of unloading.

An advantageous method according to the aspect of of positioning the airship with a major axis or major plane of the airship directed upwards, is to postion the airship laterally during loading, positioning the airship laterally during transport and positioning the airship upright during unloading. Thereby, not only partial components, e.g., a wind turbine generator tower, but the component of the entire wind turbine generator including tower, nacelle, hub and perhaps even blades, may be assembled lying flat on the ground, may be transported laterally, and may be unloaded upright at a site of installation.

Positioning an airship with a major axis or major plane of the airship directed upwards may have the advantage of being able to load and/or transport and/or unload a piece of equipment, even a complete wind turbine generator, in a position being directed upwards an with the piece of equipment being attached to or detached from the airship along a major axis or a major plane of the airship

According to an aspect of the invention, the method comprises the steps of
- loading said plurality wind turbine generator tower sections to an airship with a central axis of the plurality of wind turbine generator tower sections extending substantially upright when being loaded onto the airship
- said loading of the plurality of wind turbine generator tower sections being performed by enclosing the plurality of wind turbine generator tower sections in a cargo hold provided in the airship, said cargo hold having an aperture facing downwards
- transporting the airship with the plurality of wind turbine generator tower sections from a site of loading of the plurality of wind turbine generator tower sections to a site of installation of the plurality of wind turbine generator tower sections
- unloading said plurality of wind turbine generator tower sections from the airship in a substantially upright position with a central axis of the plurality of wind turbine generator tower sections extending upright when being unloaded to the site of installation.

Loading the plurality of wind turbine generator tower sections being performed by enclosing the plurality of wind turbine generator tower sections in a cargo hold provided in the airship, and said cargo hold having an aperture facing downwards results in a fast loading an unloading of the wind turbine tower components and in a safe transport between the site of loading and the site of unloading.

According to an aspect of the invention, a distance between the site of loading the at least one piece of equipment to the airship and the site of unloading the at least one piece of equipment from the airship is at least 10 m, preferably at least 100 m, possibly at least 1 km, possibly at least 10 km, possibly at least 50 km, possibly more than 100 km.

Airships need not roads, railways or airstrips to land and take off, and airships may be used to handle a piece of equipment over many different distances, both short distances and large distances, and both over land and over sea, possibly using the one and same airship.

According to an aspect of the invention, an average height of the piece of equipment during the step of transporting the airship with the at least one piece of equipment from the site of loading of the at least one piece of equipment to the site of installation of the at least one piece of equipment is at least 100 m above ground level or sea level, preferably at least 250 m above ground level or sea level, possibly more than 500 m above ground level or sea level.

Airships need not roads, railways or airstrips to land and take off, and airships may be used to handle a piece of equipment at different heights, both small heights and large heights, and both over land and over sea, possibly using the one and same airship.

According to an aspect of the invention, an average speed of the airship during the step of transporting the airship with the at least one piece of equipment from the site of loading of the at least one piece of equipment to the site of installation of the at least one piece of equipment is at least 10 km/hour in relation to the ground or the sea, preferably at least 50 km/hour in relation to the ground or the sea, possible more than 100 km/hour in relation or the ground or the sea, possibly even more than 200 km/hour in relation to the ground or the sea.

Airships need not roads, railways or airstrips to land and take off, and airships may be used to handle a piece of equipment at different speeds, both low speeds and high speeds, and both over land and over sea, possibly using the one and same airship.

According to an aspect of the invention, the step of loading said at
least one piece of equipment to the airship at the site of loading is performed by the airship being lowered towards the ground or sea to a position above the equipment, and that the at least one piece of equipment is attached to the airship when the airship is in the lowered position above the component without hoisting the equipment to the airship.

The airship being lowered towards the ground or sea to a position above the piece of equipment and said piece of equipment being attached to the airship without hoisting the equipment to the airship may be accomplished because of the airship being capable of vertical landing all the way to the ground or the sea.

According to an aspect of the invention, the step of loading said at
least one piece of equipment to the airship at the site of loading is performed by the airship being positioned above the ground or sea to a position above the equipment, and that the at least one piece of equipment is attached to the airship when the airship is in the position above the component by hoisting the equipment to the airship.

The airship being positioned above the ground or sea to a position above the piece of equipment and said piece of equipment being attached to the airship by hoisting the equipment to the airship may be accomplished because of the airship being capable of maintaining position in the air without moving in relation to the ground or the sea.

According to an aspect of the invention, the step of unloading said at
least one piece of equipment from the airship at the site of unloading is performed by the airship being lowered towards the ground or sea at a position for unloading the equipment, and that the at least one piece of equipment is detached from the airship when the airship is in the lowered position above the ground or sea without hoisting the equipment from the airship.

The airship being lowered towards the ground or sea to a position above the piece of equipment and said piece of equipment being detached from the airship without hoisting the equipment from the airship may be accomplished because of the airship being capable of vertical landing all the way to the ground or the sea.

According to an aspect of the invention, the step of unloading said at
least one piece of equipment from the an airship at the site of unloading is performed by the airship being positioned above the ground or sea at a position for unloading the equipment, and that the at least one piece of equipment is detached from the airship when the airship is in the position above the ground or sea by hoisting the equipment from the airship.

The airship being positioned above the ground or sea to a position above the piece of equipment and said piece of equipment being detached from the airship by hoisting the equipment from the airship may be accomplished because of the airship being capable of maintaining position in the air without moving in relation to the ground or the sea.

According to an aspect of the invention, the invention comprises a frame for transporting at least one wind turbine generator component, said frame being provided with attachment mechanisms for attaching the frame to a cargo platform of an airship, said frame preferably also being provided with attachment mechanism for attaching the frame to a trailer of a truck, and said frame furthermore preferably being provided with attachment mechanism for attaching the frame to a cargo hold of a sea-going vessel such as a ship or a barge.

A frame with attachment mechanisms for attaching the frame to a cargo platform of an airship, to a trailer of a truck, to a cargo hold of a sea-going vessel such as a ship or a barge establishes a unified system for transporting, including transport by airship, pieces of equipment such as wind turbine generator components.

According to an aspect of the invention, said attachment mechanism has the configuration of at least one trailer lock for locking the frame to a trailer of a truck, and said frame furthermore preferably being provided with another attachment mechanism for attaching the frame to the corresponding attachment mechanism of the cargo platform of the airship.

Attachment mechanism for locking the frame to a trailer of a truck and for attaching the frame to the corresponding attachment mechanism of the cargo platform of the airship establishes a unified system, with already established standard attachment mechanisms, for transporting, including transport by airship, pieces of equipment such as wind turbine generator components

According to an aspect of the invention, said frame is made of a material with an average density of the entire frame being less than cast iron GS 52.3, and with a tensile strength being at least a factor ½ in relation to the tensile strength of cast iron GS 52.3, preferably with a tensile strength being at least a factor 1 in relation to the tensile strength of cast iron GS 52.3.

The frame being manufactured by a material with an average density of the entire frame being less than cast iron GS 52.3, and with a tensile strength being at least a factor ½ in relation to the tensile strength of cast steel GS 52.3 may have the advantage that the frame does not take up to much weight in relation to the overall weight of the frame and the cargo during transport by airship.

According to an aspect of the invention, the frame is made of one or more of the following materials: carbon fibre reinforced resin profiles, glass fibre reinforced resin profiles, laminated wood, or foam filled fibre reinforced resin hollow profiles.

Manufacturing the frame from one or more of the materials carbon fibre reinforced resin profiles, glass fibre reinforced resin profiles, laminated wood, foam filled fibre reinforced resin hollow profiles may have the advantage of using techniques well suited and well know for lightweight and structural strength properties.

According to an aspect of the invention, the invention comprises an airship for transporting at least one piece of equipment for installing a wind turbine generator, said airship being provided with a cargo platform with attachment mechanisms for attaching a frame to the airship, at least some of said attachment mechanism of the cargo platform being configured as attachment mechanisms of a trailer of a truck, and possibly other of said attachment mechanism of the cargo platform being configured as attachment mechanisms of a cargo hold of a sea-going vessel such as a ship or a barge.

An airship being provided with a cargo platform with attachment mechanisms for attaching a frame to the airship may have the advantage that the airship is provided with an element, i.e. the cargo platform, dedicated for holding and attaching the one or more frames to the airship during transport.

According to an aspect of the invention, the cargo platform is situated at a lower position of the airship, and where the cargo platform is suspended in suspension elements extending from the beneath the gas-filled enclosure of the airship, said suspension elements having a fixed length providing a fixed distance between the gas-filled enclosure of the airship and the cargo platform.

The cargo platform being beneath the gas-filled enclosure of the airship provided a fixed distance between the gas-filled enclosure of the airship and the cargo platform may have the advantage of using different suspension elements such as ropes, wires and chains, but also using rigid suspension elements such as rods.

According to an aspect of the invention, the cargo platform is situated at a lower position of the airship, and where the cargo hold is suspended in suspension elements extending from the beneath the gas-filled enclosure of the airship, said suspension elements having an adjustable length providing an adjustable distance between the gas-filled enclosure of the airship and the cargo platform.

The cargo platform being beneath the gas-filled enclosure of the airship provided an adjustable distance between the gas-filled enclosure of the airship and the cargo platform may have the advantage of using different suspension elements such as ropes, wires and chains, and at the same time being able to lower the cargo platform towards the ground during loading and unloading and hoisting the cargo platform towards the airship during transport between the sites.

According to an aspect of the invention, the airship is provided with one or more pontoons extending from beneath the gas-filled enclosure of the airship or constituting a lower part of the gas-filled enclosure of the airship, said pontoons having a downwards extension providing a space between a bottom of the gas-filled enclosure of the airship and the ground, or the sea, or a vessel, or a vehicle on ground or at sea, when the pontoons are situated thereon.

Pontoons extending from beneath the gas-filled enclosure of the airship or constituting a lower part of the gas-filled enclosure of the airship may have the advantage of the airship having elements dedicated for supporting the airship during loading and unloading, said support being well defined, both in relation to support surfaces, i.e. the pontoons, and in relation to support distance between a bottom of the gas-filled enclosure of the airship and the ground, or the sea, or a vessel, or a vehicle on ground or at sea, when the pontoons are situated thereon.

According to an aspect of the invention, the distance provided by the pontoons is substantially fixed during loading and unloading when the pontoons are situated on the ground, or the sea, or a vessel, or a vehicle on ground or at sea.

A fixed distance during loading and/or unloading may have the advantage that loading and unloading the frames to and form the cargo platform can be accomplished knowing that the airship will not suddenly collapse or being lowered above the cargo and the personnel handling loading and unloading of the cargo.

According to an aspect of the invention, the distance between the gas-filled enclosure of the airship and the cargo platform, at least during loading and/or unloading of the wind turbine components in the frames, is large enough to accommodate a truck with a trailer driving onto the cargo platform.

The distance between the gas-filled enclosure of the airship and the cargo platform being is large enough to accommodate a truck with a trailer driving onto the cargo platform may have the advantage that it is possible to drive an entire truck with trailer for frames and cargo enclosed in the frames underneath the airship for easy and fast loading or unloading to and from the cargo platform.

According to an aspect of the invention, the distance between the gas-filled enclosure of the airship and the cargo platform, at least during loading and/or unloading of the wind turbine components in the frames, is at least 4 m, preferably at least 4,5 m, possibly at least 5 m, even possibly at least 10 m. The distance between the gas-filled enclosure of the airship and the cargo platform must be sufficient for the truck to drive underneath the airship, and also sufficient for any crane of the truck to be raised during loading and unloading to and from the cargo platform of frames and cargo enclosed in the frames.

According to an aspect of the invention, the at least one of the pontoons have one of the following configurations seen in a plane perpendicular to the downwards extension: oblong, circular, oval, or polygonal, and where the number of pontoons and the position of the pontoons on the airship is provided so that the gas-filled enclosure of the airship, apart from the pontoons with the proviso that the pontoons constitute part of the gas-filled enclosure, is maintained off the ground, or off the sea, or off a vessel or off a vehicle on ground or at sea.

The pontoons may have different configuration and may have different positions for ensuring proper support of the airship and/or for ensuring that the airship is maintained stabile during loading and unloading to and form the cargo platform.

When referring to an advantage, it must be understood that this advantage may be seen as a possible advantage provided by the invention, but it may also be understood that the invention is particularly, but not exclusively, advantageous for obtaining the described advantage.

In general the various aspects and advantages of the invention may be combined and coupled in any way possible within the scope of the invention.

Airships for performing one or more of the methods according to the invention may be specifically developed for performing the one or more methods.

However, hereby incorporated by reference are already developed, existing or projected airships from one or more of the following developers and manufactures of airships: Skycat/Hybrid Air Vehicles, Skyhook International, Lockheed Martin, RosAeroSystems, 21st Century Airships, Airship.org, all of which are suited for performing one or more of the methods according to the invention.

These and other aspects, features and/or advantages of the invention will be apparent from and elucidated with reference to the description hereinafter.

### BRIEF DESCRIPTION OF THE FIGURES

The method steps and the use and the airship according to the invention will now be described in more detail with regard to the accompanying figures. The figures show one way of implementing the present invention and is not to be construed as being limiting to other possible embodiments falling within the scope of the attached claim set.
Figs. A1-17 show method steps and uses of an airship, according to an overall transportation concept of the invention,
Figs. B1-B16 show method steps and uses of an airship, according to transportation of wind turbine towers in an upright position,
Figs. C1-C14 show method steps and uses of an airship, according to transportation by an airship in an upright position, and
Figs. D1-D25 show method steps and uses of an airship, according to transportation by means of a lifting device.

### DETAILED DESCRIPTION OF AN EMBODIMENT

In the following figures the invention will be described with reference to transportation of tower sections for raising a tower for a wind turbine generator. The tower is shown as consisting of three sections for illustrative purposes only.

Any number of sections is possible within the scope of the invention, and as described above the present invention can be used for handling and transporting of a range of pieces of equipment for installing a wind turbine generator, either equipment being components of the wind turbine tower itself, or equipment such as substations and the like for delivering electrical power from the wind turbine generator, or equipment such as cranes and the like for installing or servicing the wind turbine generator.

Fig. A1 shows schematically three towers sections A104, A106, A108 at a site of manufacturing (symbolized by a factory building) and an airship A100 ready to load the tower sections A104, A106, A108. The tower sections A104, A106, A108 are shown in an upright orientation, preferably a vertical orientation, but any orientation, such as horizontal, is also covered by the scope of the present invention.

The site of manufacturing is just one example of a site of loading A110. The airship A100 has propellers A112, A114 for controlling the position of the airship. Fig. A2 shows the airship A100 lowered to a position above the tower sections A104, A106, A108 ready for being loaded onto the airship A100.

Fig. A3 shows schematically the airship A100 comprising cargo attachment elements A102 adapted to receive the wind turbine tower sections A104, A106, A108. The cargo attachment elements A102 are shown having three different sizes corresponding to the different sizes of the wind turbine tower sections A104, A106, A108. In practise the cargo attachment elements A102 may be identical, but adjustable, to match and securely hold different sizes and shapes of cargo, such as wind turbine tower sections or other pieces of equipment for installing or servicing a wind turbine generator component.

Fig. A4 shows the airship A100 displaced upwards and with the wind turbine tower sections A104, A106, A108 being suspended below the airship A100. If desired, the airship A100 may also be designed so that the cargo is partially or fully enclosed inside the airship A100 during transportation. Hereby, the cargo is better protected and the aerodynamic properties of the airship may be improved. Partially or fully enclosing the wind turbine tower sections A104, A106, A108 inside the airship A100 during transportation can be particularly important if the transportation is over long distances and/or at high speeds. On the other hand, enclosing cargo inside the air ship A100 may result in a need for more complex cargo holds A102 and larger outer dimensions of the airship A100.

Fig. A5 shows the airship 100 moving forwards as illustrated by the arrow A416. The propellers A112, A114 are shown in an inclined orientation to illustrate that the propellers A112, A114 are used to control the displacement of the airship A100.

Fig. A6 and Fig. A7 show the airship A100 above and at a site of unloading A520 (symbolized by a couple of trees), respectively. The airship A100 moves downwards towards the site of unloading A520 to unload the wind turbine tower sections A104, A106, A108.

Fig. A8 shows the airship A100 setting off again after having unloaded the wind turbine tower sections A104, A106, A108, possibly to return to the site of loading A110 as shown in Fig. A9.

Fig. A10 to Fig. A17 show schematically an alternative method of handling and transporting the wind turbine tower sections A104, A106, A108. Fig. A10 shows the airship A100 situated at a larger distance above the site of loading A110 than in the method step shown in Fig. A3. A lifting device, such as a wire, a rope, a chain or a rod is lowered from the airship A100 to the first wind turbine tower section A104 and attached thereto by any suitable and releasable elements which will be well-known to a person skilled in the art. Suitable and releasable elements may e.g. comprise attaching by use of hooks or shackles.

When the wind turbine tower section A104 has been attached to the lifting device, the wind turbine tower section A104 is lifted towards the corresponding cargo attachment element A102 by use of lifting equipment, such as a motor-driven pulley arranged at or inside the airship A100. Subsequently to the first wind turbine tower section A102 being lifted towards the corresponding cargo attachment element A102, the other wind turbine tower sections A106, A108 are loaded onto the airship A100 in a corresponding manner.

Fig. A12 and Fig. A13 show an alternative method to the method step shown and described with reference to fig. A10 and fig. A11. In the alternative method, all wind turbine tower sections A104, A106, A108 are loaded onto the airship A100 at the same time. This may e.g. be desired in order to save time.

Fig. A14 to fig. A17 correspond to fig. A5 to fig. A9 except for the alternative method of connecting the wind turbine tower sections A104, A106, A108 to the cargo attachment elements A102. Fig. A16 and Fig. A17 show that all wind turbine tower sections A104, A106, A108 are lowered at the same time at the site of unloading A520. The wind turbine tower sections A104, A106, A108 may also be unloaded one at a time if desired.

Fig. B1 shows the airship with the gas-filled body, and with the cargo hold B102 situated inside the gas-filled body and with the B112, B114 propellers situated at the side of the gas-filled body.

Fig. B2 shows the airship B100 from beneath with the cargo hold B102 in the gas-filled body. In the embodiment shown, the cargo hold B102 has a rectangular aperture. In the embodiment shown, the airship B100 is provided with four propellers B112, B114 situated at the side and at the front and the rear or the gas-filled body of the airship B100.

Fig. B3 is a perspective view showing the airship B100 with the gas-filled body, the cargo hold B102 and the propellers B112, B114 at the side, at the front and the rear of the airship B100.

Fig. B4 shows an airship B100 above ground at a site of manufacturing B110 (symbolized by a factory building) wind turbine tower sections B104, B106, B108. The airship B100 is provided with a cargo hold B102 shown by dotted lines. The cargo hold B102 is intended for accommodating the wind turbine tower sections B104, B106, B108.

Fig. B5 shows the airship B100 being lowered to the ground, and with wind turbine tower sections B104, B106, B108 still situated on the ground and enclosed in the cargo hold B102. The wind turbine tower sections B104, B106, B108 are intended for being attached to the airship B100 when situated in the cargo hold B102.

Fig. B6 shows the airship B100 taking off from the ground with the wind turbine tower sections B104, B106, B108 situated in the cargo hold B102. In the embodiment shown, an aperture of the cargo hold B102 is open during take off and during subsequent transportation of the wind turbine tower sections B104, B106, B108 attached in the cargo hold B102.

Fig. B7 also shows the airship B100 taking off from the ground with the wind turbine tower sections B104, B106, B108 situated in the cargo hold B102. In the embodiment shown, the aperture of the cargo hold B102 is closed by a structure B418 during take off and during subsequent transportation of the wind turbine tower sections B104, B106, B108 attached in the cargo hold. Hereby, the cargo is better protected and the aerodynamic properties of the airship may be improved. Partially or fully closing the aperture of the cargo hold B102 during transportation can be particularly important if the transportation is over long distances and/or at high speeds. The airship B100 has propellers B112, B114 for controlling the position of the airship.

Fig. B8 shows the airship B100 flying above ground at a site of unloading B520 the wind turbine tower sections B104, B106, B108 such as a site of installation of the wind turbine tower sections (symbolised by a couple of trees). The wind turbine tower sections B104, B106, B108 are still situated in the cargo hold B102 shown by dotted lines.

Fig. B9 shows the airship B100 being lowered to the ground at the site of installation B520. The wind turbine tower sections B104, B106, B108 are unloaded by being detached from the airship B100 when the wind turbine tower sections B104, B106, B108 still are situated in the cargo hold B102.

Fig. B10 shows the airship B100 taking off from the ground with the wind turbine tower sections B104, B106, B108 now being detached from the airship B100, and now situated on the ground at the site of installation B520.

Fig. B11 shows the airship B100 being lowered to the ground at the site of installation B520. The wind turbine tower sections B104, B106, B108 are to be unloaded by being detached from the airship B100, however, nor all at the time, but individually one by one as shown in the Fig. B12-B16.

Rather than unloading all tower sections B104, B106, B108 when the airship B100 is lowered to the ground, only one or some of the tower sections may be unloaded. The airship B100 may then be used to unload the other tower sections after moving to a different height above the ground.

For example, Fig. B12 shows the airship B100 taking off from the ground with a first wind turbine tower section B104 now being detached from the airship B100, and now situated on the ground at the site of installation B520. A second wind turbine tower section B106 is still attached to the airship B100 and the second wind turbine towers section B106 is hoisted together with the airship B100.

A guide element 926 extends between the first wind turbine tower section B104 on the ground and the second wind turbine tower section B106 still attached to the airship B100 and still enclosed in the cargo hold B102.

Fig. B13 shows the airship B100 being lowered towards the first wind turbine tower section B104 situated on the ground, and with the second wind turbine tower section B106 being positioned on the first wind turbine tower section B104.

Fig. B14 shows the airship B100 taking off from the position above the first and the second wind turbine tower sections B104, B106 with both the first wind turbine tower section B104 and the second wind turbine tower section B106 now being detached from the airship B100, and now being installed at the site of installation B520. The remaining third wind turbine tower section B108 is still attached to the airship B100 and is still enclosed in the cargo hold B102 and is hoisted together with the airship B100.

A guide element 928 extends between the second wind turbine tower section B106 at the site of installation B520 and the remaining third wind turbine tower section B108 still attached to the airship B100 and still enclosed in the cargo hold B102.

Fig. B15 shows the airship being lowered towards the second wind turbine tower section B106 situated at the site of installation B520, and with the remaining third wind turbine tower section B108 being positioned on the other wind turbine tower section B106.

Fig. B16 shows the airship B100 taking off from the position above the first, the second and the third wind turbine tower sections B104, B106, B108 with all wind turbine tower sections now being detached from the airship B100, and now being installed at the site of installation B520 to form a wind turbine tower.

Fig. C1 shows schematically an airship C100 above a site of loading C110, which in this case is a site of manufacturing (symbolized by a factory building) of the wind turbine generator. The airship C100 comprises a cargo hold C102 inside the airship C100. Alternatively, the airship may comprise a cargo hold designed so that the pieces of equipment to be moved by the airship C100 are attached to the exterior of the airship C100.

Hereby, it may be possible to use an airship C100 with smaller dimensions, but on the other hand the pieces of equipment are not as well protected as when they are held inside the airship C100 during transportation and the aerodynamic properties of the airship are compromised. The airship A100 has propellers C112, C114 for controlling the position of the airship C100.

The airship C100 displaces to an upright orientation, possibly by use of propellers C112, C114, to a position just above the wind turbine tower section C104 to be loaded onto the airship C100. This position is shown in fig. C2.

Subsequently, the airship C100 is lowered over the wind turbine tower section C104 as shown in fig. C3, so that the wind turbine tower section C104 is received inside the cargo hold C102. When the wind turbine tower sections C104, C106, C108 are placed at the site of loading C110, the wind turbine tower sections C104, C106, C108 may be placed with such a mutual distance that enough room is provided for the airship C100 to land over each wind turbine tower section C104, C106, C108.

If the site of loading C110 is also used for storing the wind turbine tower sections C104, C106, C108, the wind turbine tower section C104, C106, C108 may initially be arranged with a smaller mutual distance and then be separated, e.g. one at a time, prior to loading onto the airship C100. In the figures, only one wind turbine tower section C104 is transported at a time, but it is also possible to move a plurality of wind turbine tower sections together provided there is enough space in the cargo hold C102. Furthermore, it may be possible to transport a complete wind turbine generator including tower, nacelle, hub and blades, or to transport part of a wind turbine generator, such as a "bunny" comprised of a hub with two or three blades attached.

When the wind turbine tower section C104 has been attached inside the cargo hold C102, the airship C100 takes off as shown in fig. C4, and the airship C100 is subsequently moved to a horizontal orientation as shown in fig. C5.

Fig. C5 shows this change of orientation taking place just above the site of loading C110, but the actual height of transportation from the site of loading to a site of unloading may be significantly higher, e.g. if the airship C100 is to fly over mountains. In this case, the airship C100 may fly to its final height of flying in an upright orientation, or in a lateral orientation or in an inclined orientation between an upright and a lateral orientation.

Fig. C6 shows the airship C100 during flight, and where orientation is controlled at least partially by use of the propellers C112, C114.

The upright orientation of the airship is determined along a major axis of the airship in case the airship has a longitudinal configuration as shown in the figures, or along a major plane in case the airship has a disk-like configuration.

Fig. C7 shows the airship C100 arriving above a site of unloading C520, which in the illustrated example is a site of installation (symbolized by a couple of trees) of the wind turbine generator. The airship C100 stops and is turned to an upright orientation as shown in fig. C8. The airship C100 is then lowered so that the wind turbine tower section C104 is placed on the ground, as shown in fig. C9, e.g. on a foundation of the wind turbine generator. The wind turbine tower section C104 is released from the airship C100, and the airship C100 takes off again as shown in fig. C10.

In the embodiment of the invention described above, the wind turbine tower section C104 is loaded onto and unloaded from the airship C100 in an upright orientation, whereas the airship C100 transports the wind turbine tower section C104 in a lateral orientation. In an alternative embodiment shown in fig. C11 to fig. C13, the wind turbine tower section C104 is loaded onto the airship C100 in a lateral orientation, and the airship transports the wind turbine tower section C104 in the lateral orientation, whereas the wind turbine tower section C104 is preferably unloaded in an upright orientation as described above.

In either embodiment it may e.g. be possible to assemble more wind turbine tower sections or even a whole wind turbine generator at one site and subsequently transport the wind turbine tower sections or the complete wind turbine generator to the site of installation.

Hereby, hoisting the upper parts of the wind turbine generator such as the nacelle, the hub and the blades to large heights may be avoided, and which hoisting typically is done by a large crane that may be expensive to rent, difficult to transport to the site of installation, or that may have a limited height or capacity of hoisting. Instead of using a crane, the tower or one or more wind turbine generator components are hoisted by use of the airship C100.

If a piece of equipment such as a wind turbine tower or a whole wind turbine generator is to be transported a short distance only, it may also be advantageous to transport it with an airship C100 in an upright orientation as shown in fig. C14.

Fig. D1 shows an airship D100 with a cargo platform D102 suspended underneath a gas-filled body of the airship D100. Suspension of the cargo platform D102 may be provided by wires, ropes, rods or other elements suitable for suspending the cargo platform D102. Fig. D1 shows the airship D100 flying above a site of loading D110 such as a site of manufacturing (symbolised by a factory building) wind turbine tower sections D104, D106, D108, ready for loading wind turbine tower sections D104, D106, D108 situated on ground at the site of manufacturing D110. The airship D100 is maintained above the site of manufacturing D110 either by means of the airship D100 being lighter than air and/or by means of the airship both having the gas-filled body and having propellers D112, D114, as shown, said propellers D112, D114 being directed so as to provide an additional lifting force to the airship D100.

Fig. D2 shows the airship D100 with the cargo platform D102 being lowered to the ground from the airship D100, the airship D100 still flying above the site of manufacturing D110. When the cargo platform D102 has been lowered to the ground, the wind turbine tower sections D104, D106, D108 are loaded onto the cargo platform D102. The cargo platform D102 may be lowered to the ground by means of motor-driven pulleys of the airship D100, said pulleys intended for both lowering and hoisting the cargo platform D100.

Fig. D3 shows the cargo platform D102 being hoisted from the ground to a position just underneath the gas-filled body of the airship D100, and with the wind turbine tower sections D104, D106, D108 loaded onto the cargo platform D102.

Fig. D4 shows the airship D100 transporting the wind turbine tower sections D104, D106, D108 in a transport direction shown by the arrow D416. The cargo platform D102 is maintained in the hoisted position, and the wind turbine tower sections D104, D106, D108 are situated on the cargo platform D102 during the transport. The propellers D112, D114 of the airship provide a propulsive force on the airship D100 for displacing the airship D100 in the transport direction shown by the arrow D416.

Fig. D5 shows the airship D100 flying above a site of unloading D520 such as a site of installation (symbolised by a couple of trees) of the wind turbine tower sections D104, D106, D108, ready for unloading the wind turbine tower sections D104, D106, D108 situated on cargo platform D102. The airship D100 is maintained above the site of installation D520 by means of the airship having a gas-filled body making the airship lighter than air and/or by means of the airship both having a gas-filled body and having the propellers D112, D114, as shown, also providing a lifting force to the airship D100.

Fig. D6 shows the airship D100 with the cargo platform D102 being lowered to the ground from the airship D100, the airship D100 still flying above the site of installation D520. The wind turbine tower sections D104, D106, D108 are to be unloaded from the cargo platform D102. The cargo platform D102 may be lowered to the ground by means of the motor-driven pulleys of the airship D100, said pulleys lowering the cargo platform D102.

Fig. D7 shows the airship D100 flying above a site of installation D520 after having unloaded the wind turbine tower sections D104, D106, D108 on the ground at the site of installation D520. Hoisting of the cargo platform D102 may be provided by wires, ropes, rods or other elements suitable for suspending the cargo platform D102.

Fig. D8 shows an airship D100 with a cargo platform suspended underneath the airship D100. The airship D100 is provided with pontoons D802, D804 establishing a space between the bottom of the gas-filled body of the airship D100 and a foot of the pontoons D802, D804. Said space may be dimensioned so that a need for hoisting of the cargo platform D102 is eliminated, i.e. the cargo platform D102 may be positioned in a fixed distance underneath the airship D100.

The pontoons may have different configuration and may have different positions for ensuring proper support of the airship and/or for ensuring that the airship is maintained stabile during loading and unloading to and form the cargo platform. In the embodiment shown, the pontoons D802, D804 are provided in the front and the rear of the airship D100. In another embodiment, the pontoons may be provided to the side at the underside of the gas-filled body of the airship D100. In still another embodiment, the pontoons may be provided along outer boundaries so that at least three, preferably four or more pontoons support the airship D100. The pontoons may be oblong, may be pillar-like or may have other configurations suitable in relation to the overall design and size of the airship in question.

Suspension of the cargo platform D100 may be provided by wires, ropes, rods or other elements suitable for suspending the cargo platform D102. Fig. D8 shows the airship D100 flying above e.g. a site of loading D110 wind turbine tower sections D104, D106, D108, ready for loading wind turbine tower sections D104, D106, D108 situated on ground at the site of loading D110. The airship D100 is maintained above the site of loading D110 by means of the airship D100 being lighter than air and/or by means of the airship both having a gas-filled body and having propellers D112, D114, as shown, also providing a lifting force of the airship D100.

Fig. D9 shows the airship D100 with the cargo platform D102 being lowered to the ground. The wind turbine tower sections D104, D106, D108 are loaded onto the cargo platform D102. The cargo platform D102 is lowered to the ground by means of the airship D100 itself being lowered to the ground, with the pontoons D802, D804 resting on the ground, and the space between the pontoons D802, D804 accommodating the wind turbine tower sections D104, D106, D108.

Fig. D10 shows the airship D100 being hoisted from the ground to a position above the site of loading D110 and with the wind turbine tower sections D104, D106, D108 loaded onto the cargo platform D102.

Fig. D11 shows an airship D100 with a cargo platform D102 suspended underneath the airship D100. Suspension of the cargo platform D102 may be provided by wires, ropes, rods or other elements suitable for suspending the cargo platform D102. Fig. D11 shows the airship D100 flying above e.g. a site of loading D110 of wind turbine tower sections D104, D106, D108, ready for loading a truck D1102 with at least one wind turbine tower section D104, said truck D1102 situated on ground at the site of loading D110. The airship D100 is maintained above the site of loading D110 by means of the airship D100 being lighter than air and/or by means of the airship D100 both having a gas-filled body and having propellers D112, D114, as shown, also providing a lifting force to the airship D100.

Fig. D12 shows the airship D100 with the cargo platform D102 being lowered to the ground from the airship D100, the airship D100 still flying above the site of loading D110.

Fig. D13 shows the airship D100 with the cargo platform D102 being lowered to the ground from the airship D100, said airship D100 still flying above the site of loading D110. The truck D1102 with the at least one wind turbine tower section D104 is loaded onto the cargo platform D102, possibly by the truck D1102 itself, and loaded with the at least one wind turbine tower section D104, driving onto the cargo platform D102. The cargo platform D102 may be lowered to the ground by means of motor-driven pulleys of the airship D100, said pulleys lowering and hoisting the cargo platform D102.

Fig. D14 shows the cargo platform D102 being hoisted from the ground to a position just underneath the airship D100, and with the truck D1102, with the at least one wind turbine tower section D104 loaded onto the cargo platform D102.

Fig. D15 shows an airship D100 with another type of lifting device D102 than a cargo platform being suspended underneath the airship D100. Suspension of the lifting device D102 may be provided by wires, ropes, rods or other elements suitable for suspending the lifting device D102. Fig. D15 shows the airship D100 flying above e.g. a site of loading D110 wind turbine tower sections D104, D106, D108, ready for loading wind turbine tower sections D104, D106, D108 situated on ground at the site of loading D110. The airship D100 is maintained above the site of loading D110 by means of the airship D100 being lighter than air and/or by means of the airship both having a gas-filled body and having propellers D112, D114, as shown, also providing a lifting force to the airship D100.

Fig. D16 shows the airship D100 being lowered to the ground with the pontoons D802, D804 resting on the ground, and the space between the pontoons D802, D804 accommodating the wind turbine tower sections D104, D106, D108. The lifting device D102 is situated above the wind turbine tower sections D104, D106, D108, ready to be lowered towards the ground for the wind turbine tower sections D104, D106, D108 to be loaded to the lifting device (see Fig. D17).

Fig. D17 shows the wind turbine tower sections D104, D106, D108 being loaded onto the lifting device D102. The lifting device D102 may be lowered towards the ground by means of motor-driven pulleys of the airship D100, said pulleys lowering and hoisting the lifting device D102 and by means the airship D100 itself being lowered to the ground, the pontoons D802, D804 resting on the ground, and the space between the pontoons D802, D804 accommodating the wind turbine tower sections D104, D106, D108.

Fig. D18 shows the wind turbine tower sections D104, D106, D108 being loaded onto the lifting device D102 and the lifting device D102 being hoisted.
Fig. D19 shows the airship D100 taking off from the ground to a position above the site of loading D110 and with the wind turbine tower sections D104, D106, D108 loaded onto the lifting device D102.

Fig. D20 shows an airship D100 with a lifting device D102 being suspended underneath the airship D100. Suspension of the lifting device D102 may be provided by wires, ropes, rods or other elements suitable for suspending the D102. Fig. D20 shows the airship D100 flying above e.g. a site of loading D110 wind turbine tower sections D104, D106, ready for loading wind turbine tower sections D104, D106 enclosed in frames D1502 and situated on ground at the site of loading D110. The airship D100 is maintained above the site of loading D110 by means of the airship D100 being lighter than air and/or by means of the airship D100 both having a gas-filled body and having propellers D112, D114, as shown, also providing a lifting force to the airship D100.

Fig. D21 shows the airship D100 being lowered to the ground with the pontoons D802, D804 resting on the ground, and the space between the pontoons D802, D804 accommodating the wind turbine tower sections D104, D106. The lifting device is situated above the wind turbine tower sections D104, D106 enclosed in frames D1502, ready to be lowered towards the ground for the wind turbine tower sections D104, D106 enclosed in frames D1502 to be loaded to the lifting device D102.

Fig. D22 shows the wind turbine tower sections D104, D106 being loaded onto the lifting device D102. The lifting device D102 may be lowered towards the ground by means of motor-driven pulleys of the airship D100, said pulleys lowering and hoisting the lifting device D102 and by means the airship D100 itself being lowered to the ground, the pontoons D802, D804 resting on the ground, and the space between the pontoons D902, D804 accommodating the wind turbine tower sections D104, D106 enclosed in the frames D1502.

Fig. D23 shows the wind turbine tower sections D104, D106 enclosed in the frames D1502 being loaded onto the lifting device D102 and the lifting device D102 being hoisted.
Fig. D24 shows the airship D100 taking off from the ground to a position above the site of loading D110 and with the wind turbine tower sections D104, D106 enclosed in the frames D1502 loaded onto the lifting device D102.

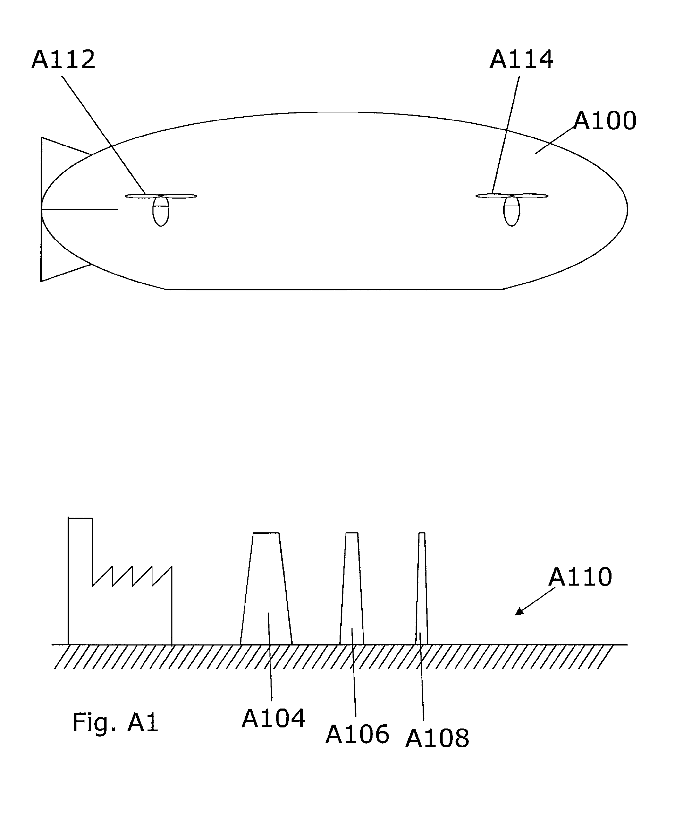

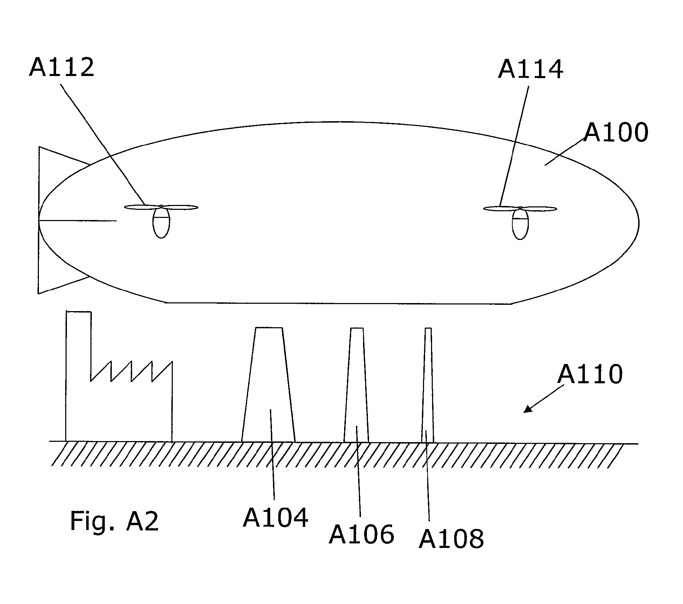

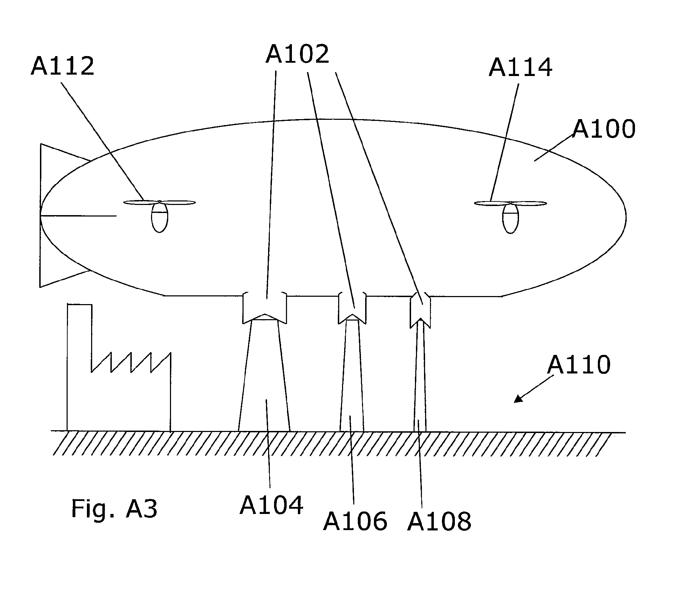

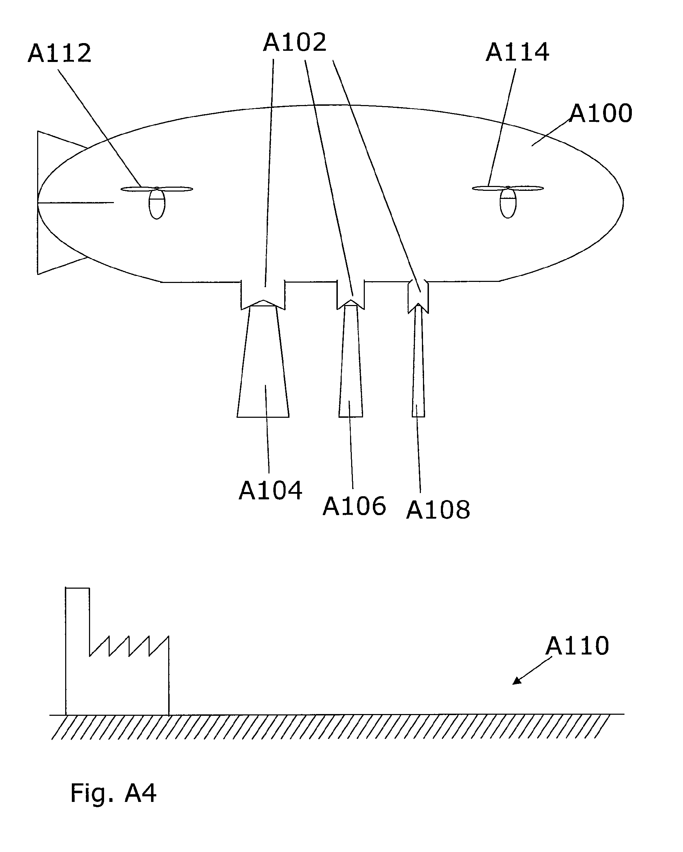

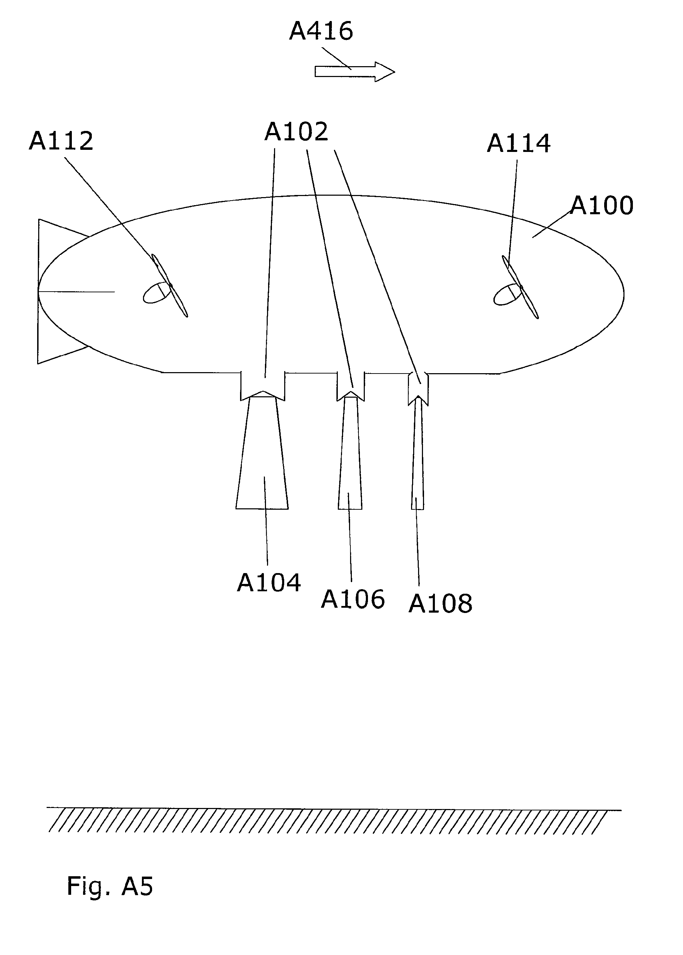

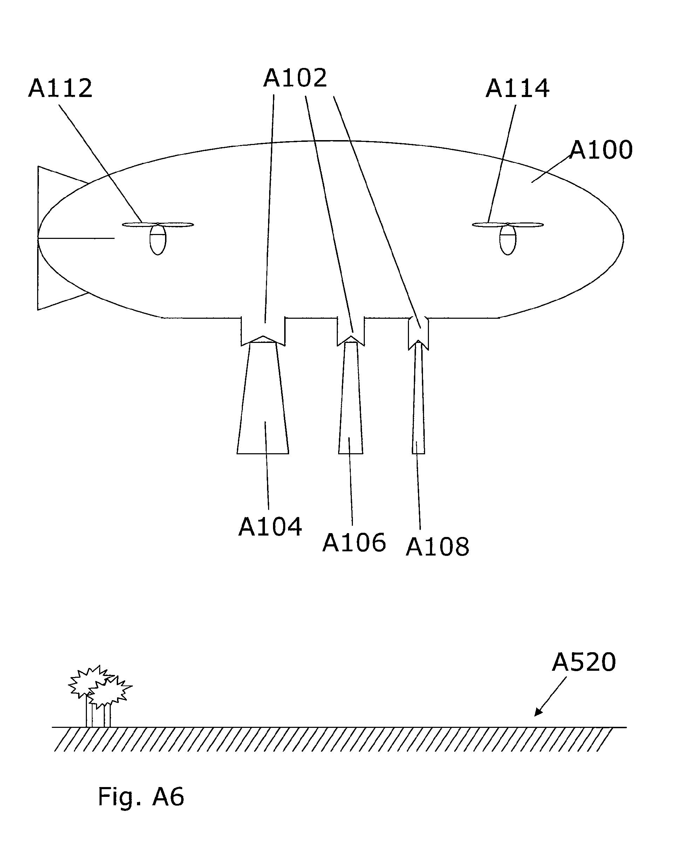

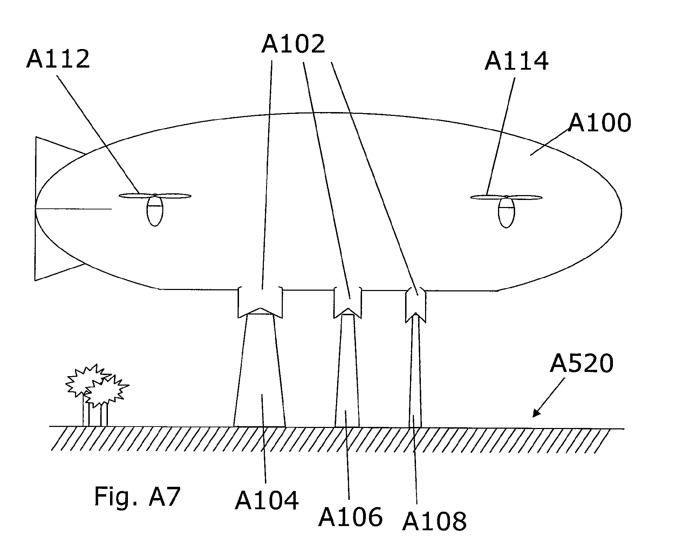

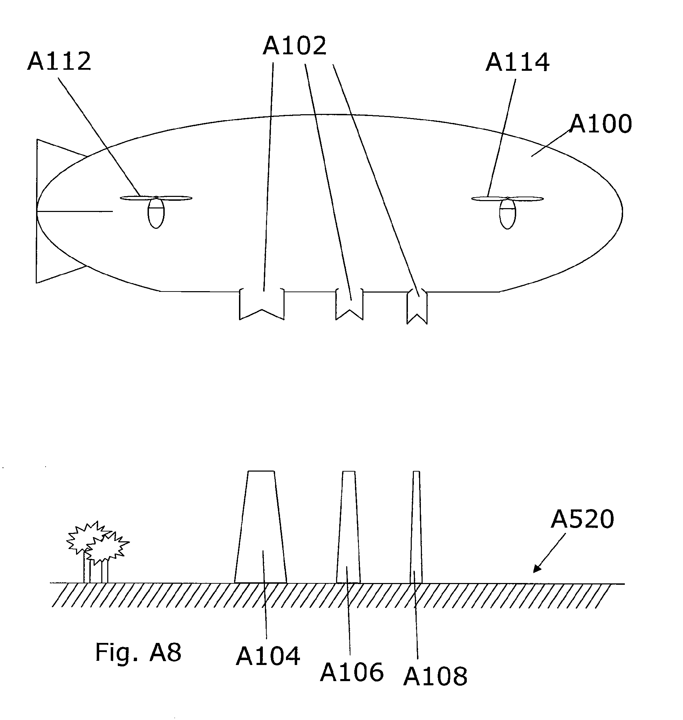

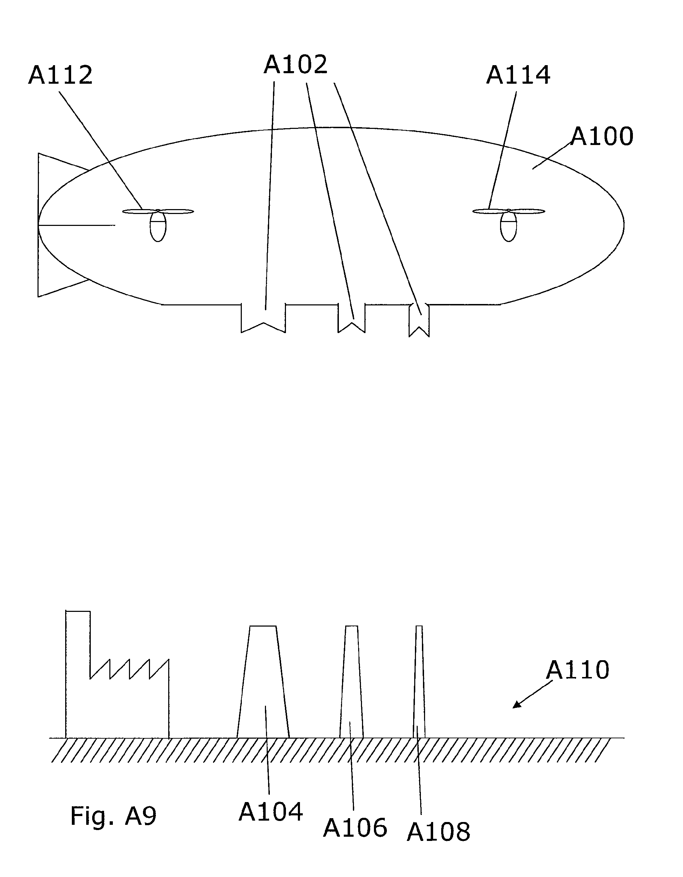

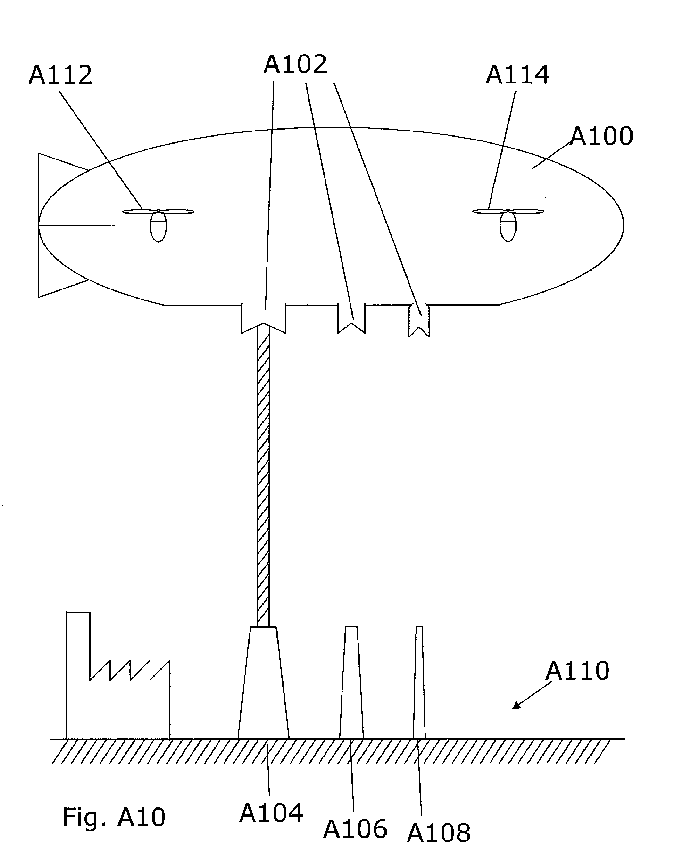

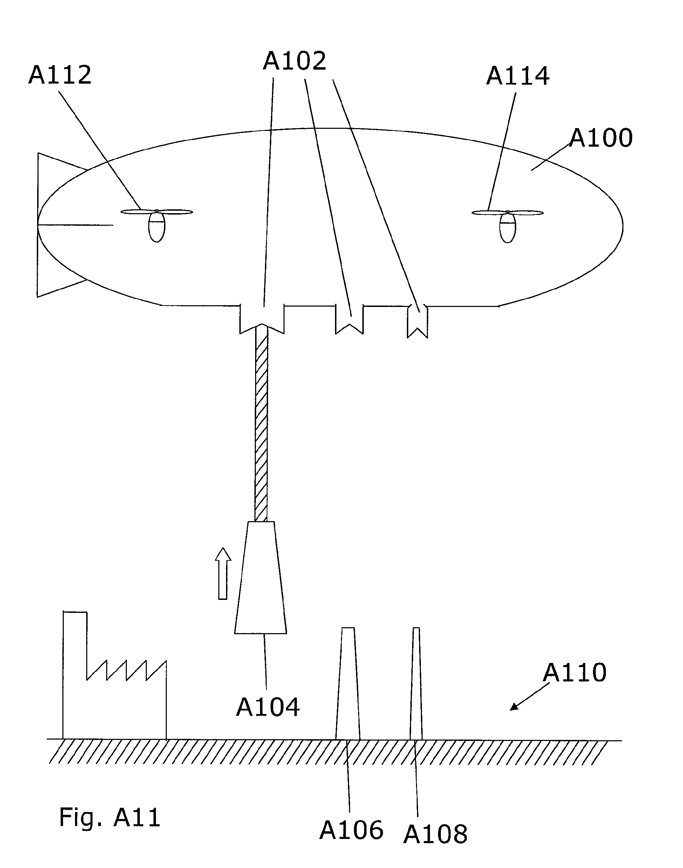

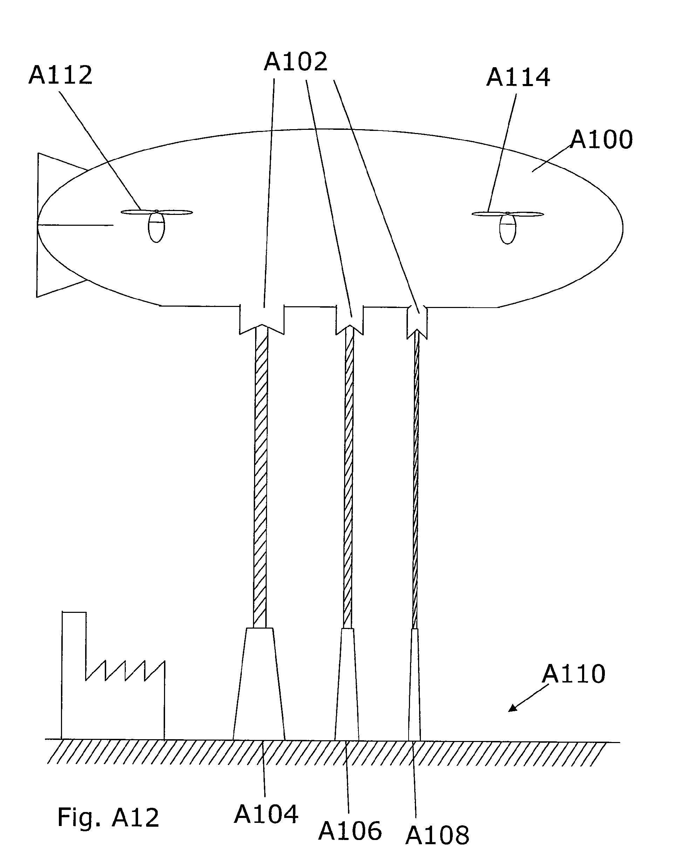

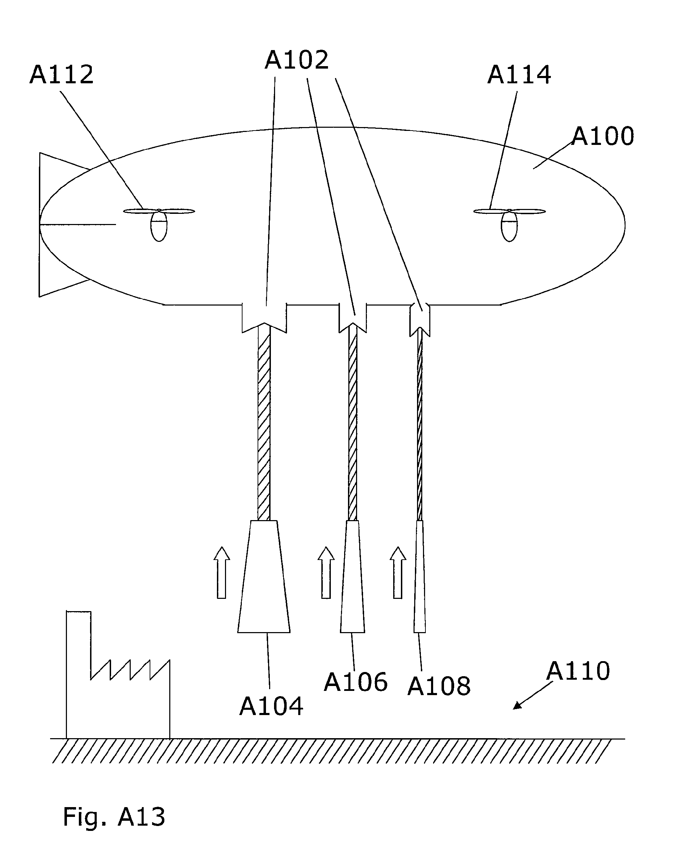

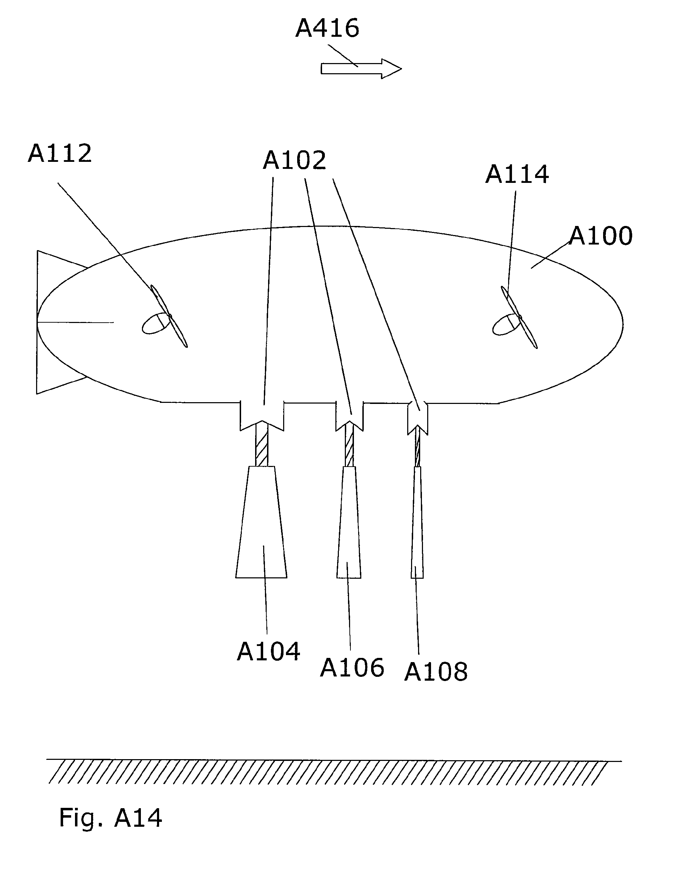

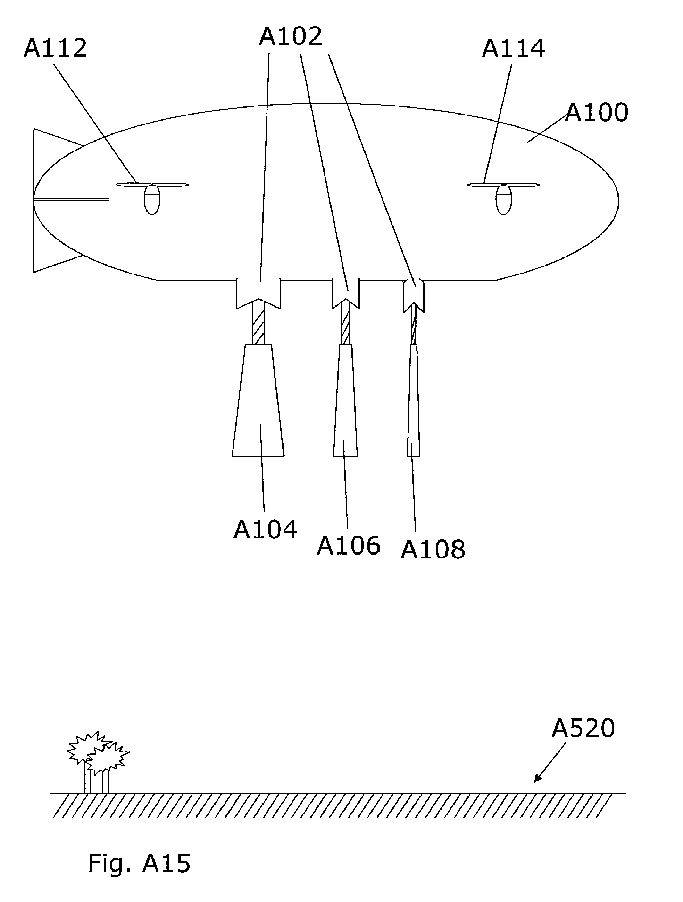

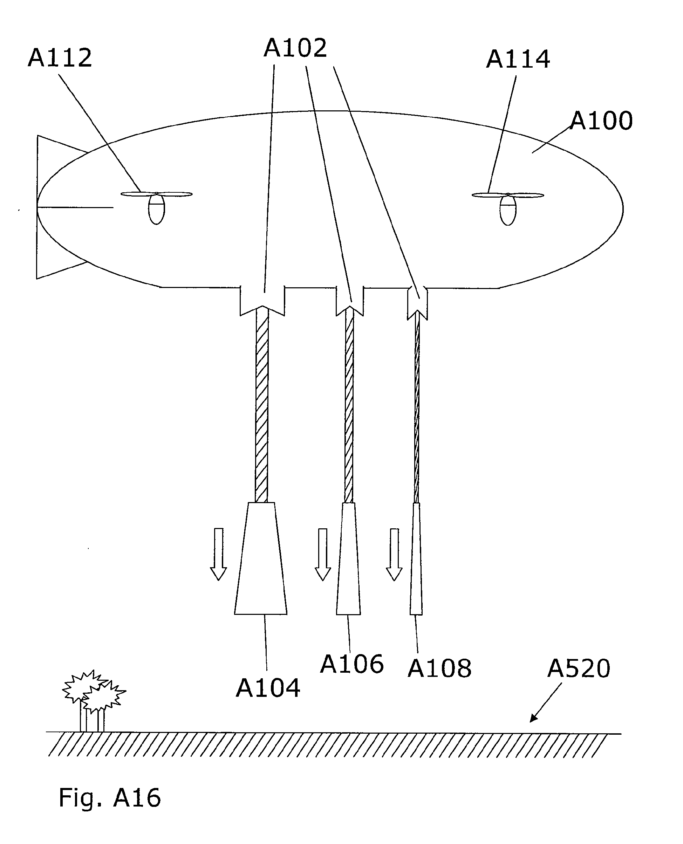

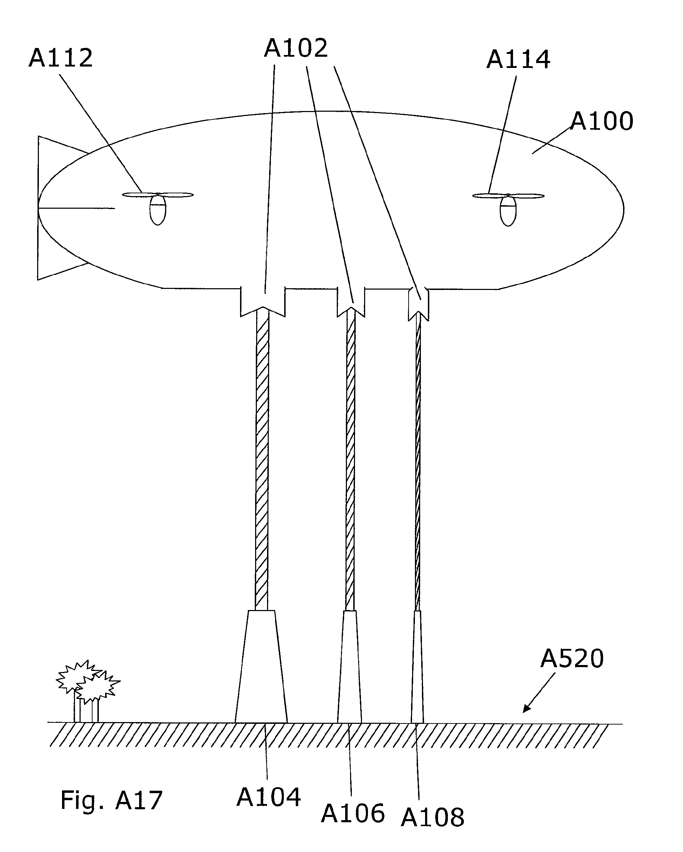

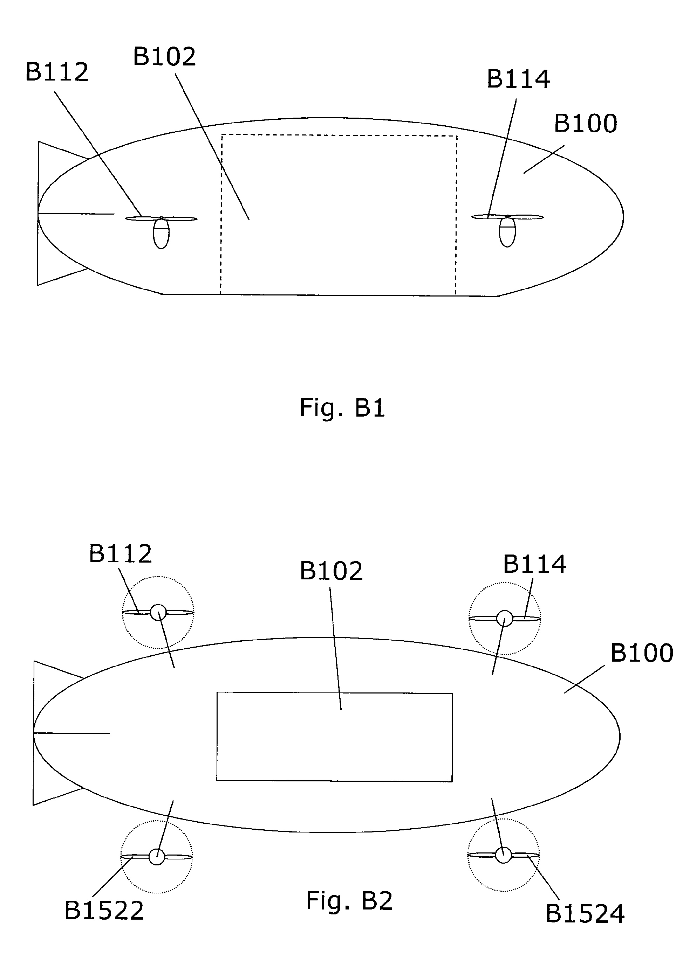

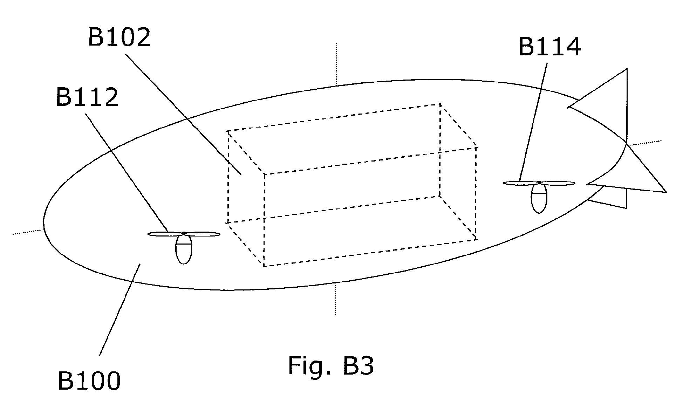

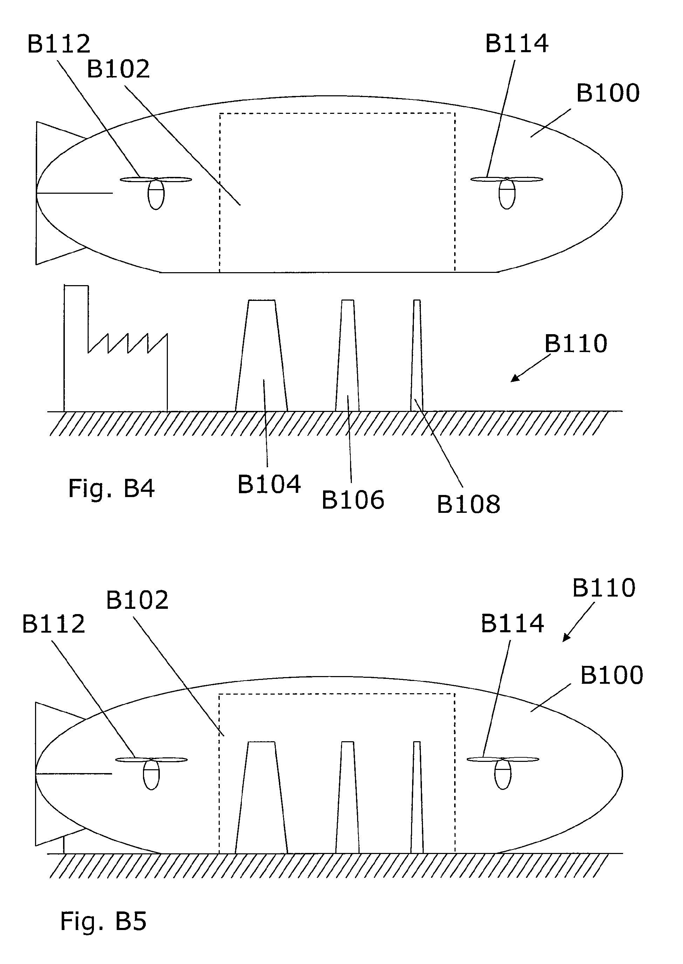

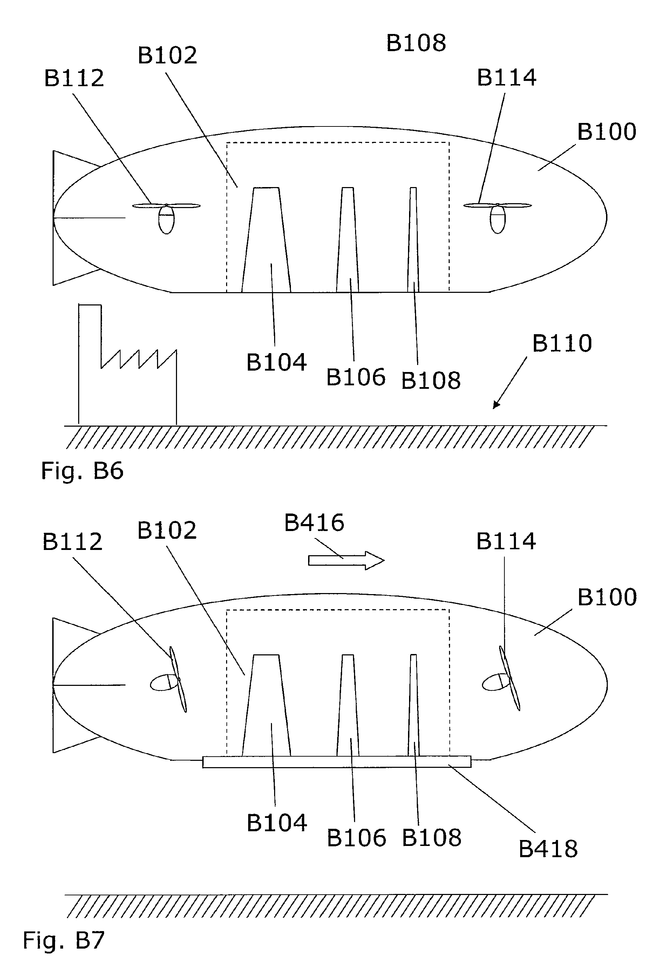

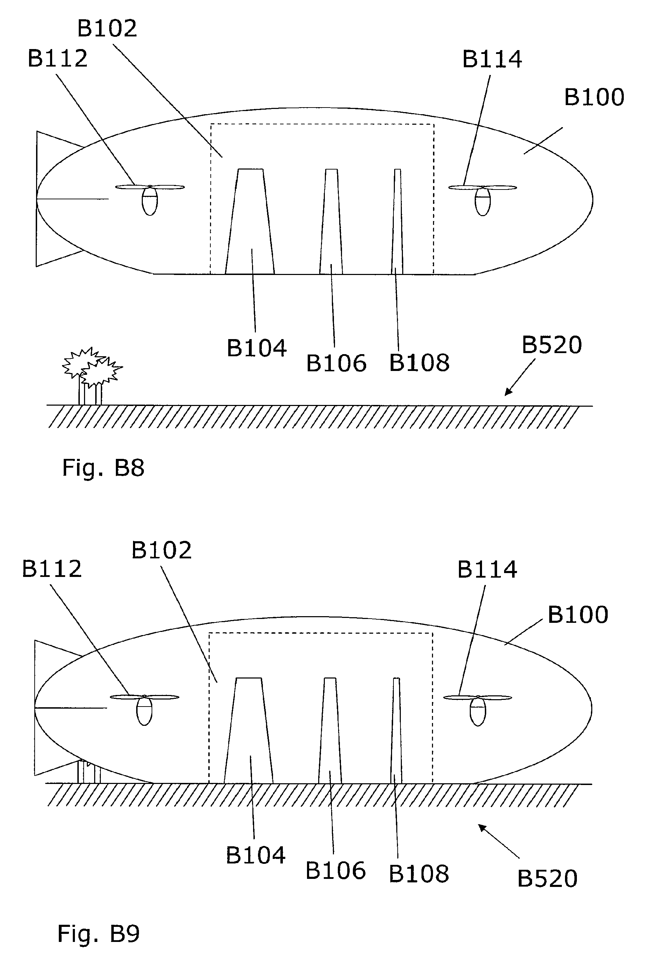

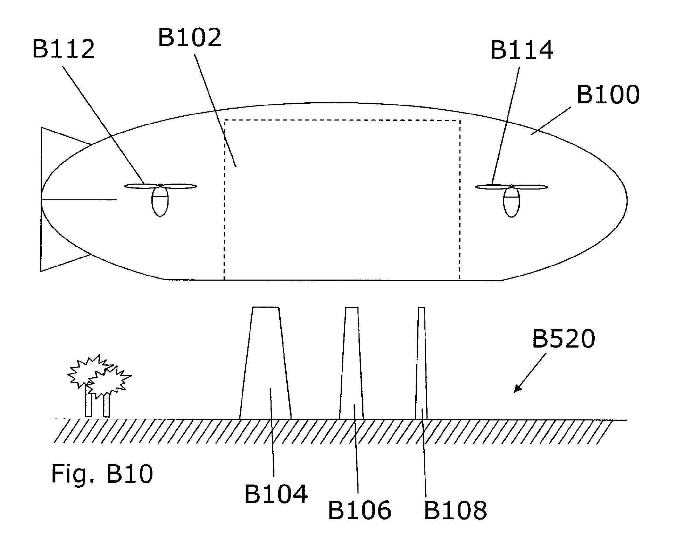

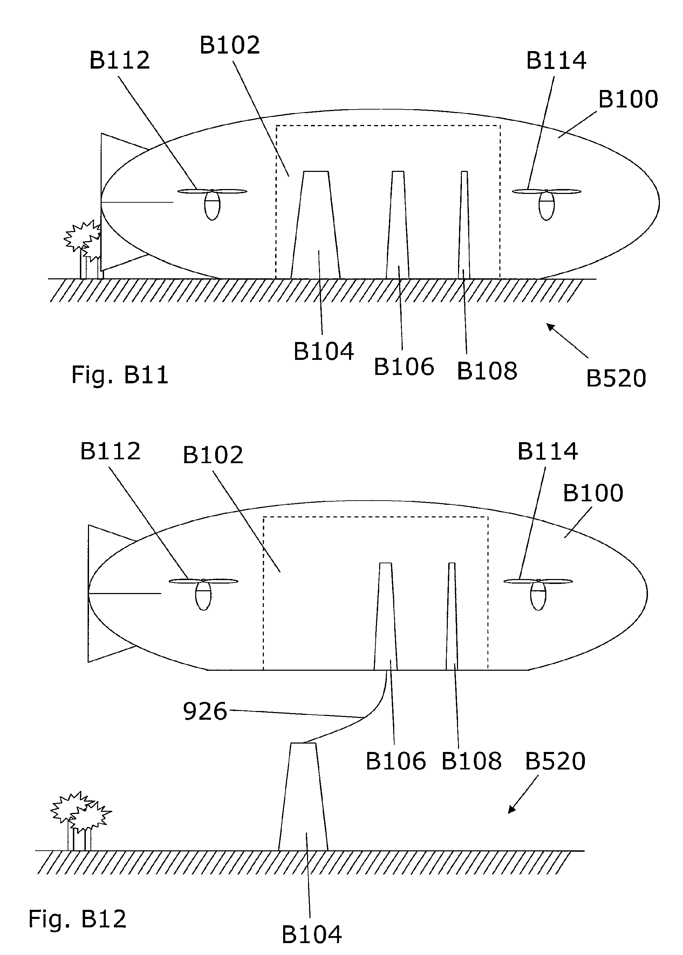

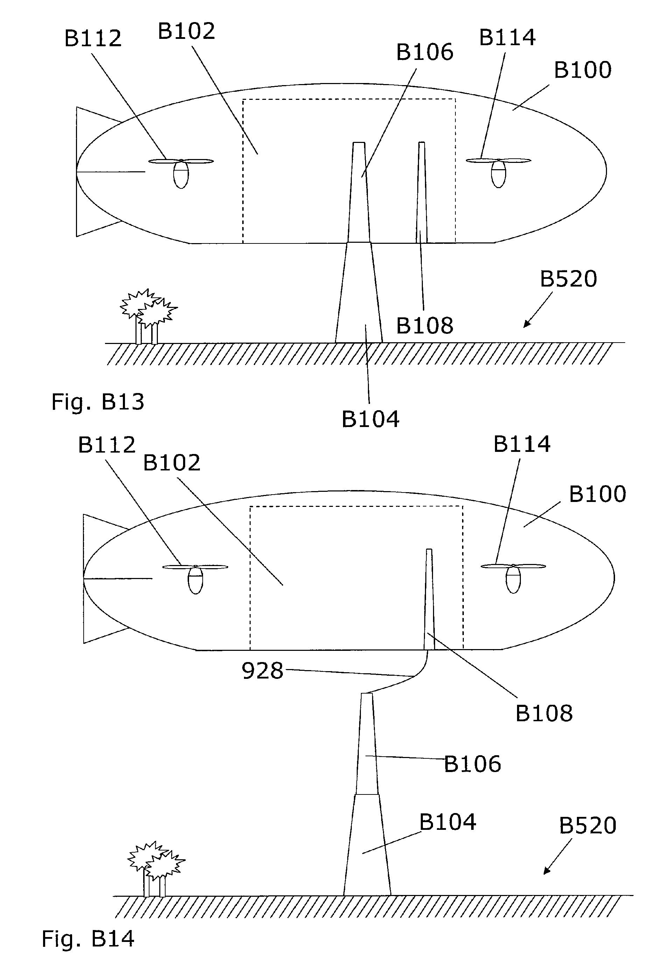

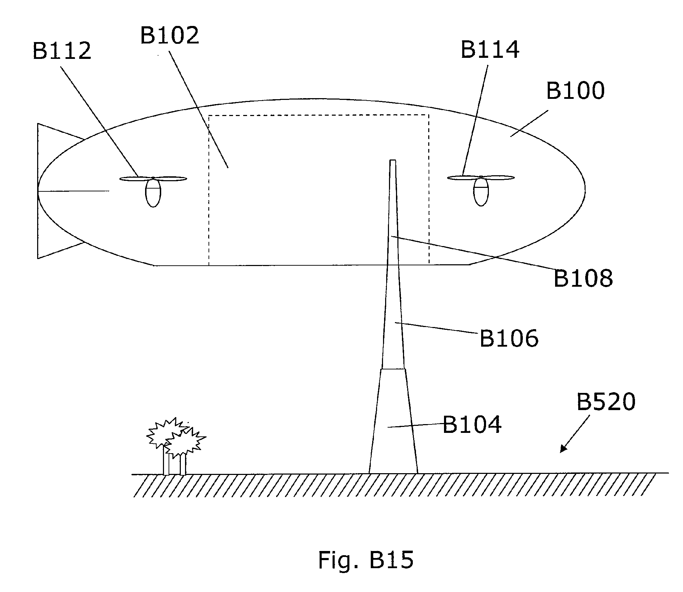

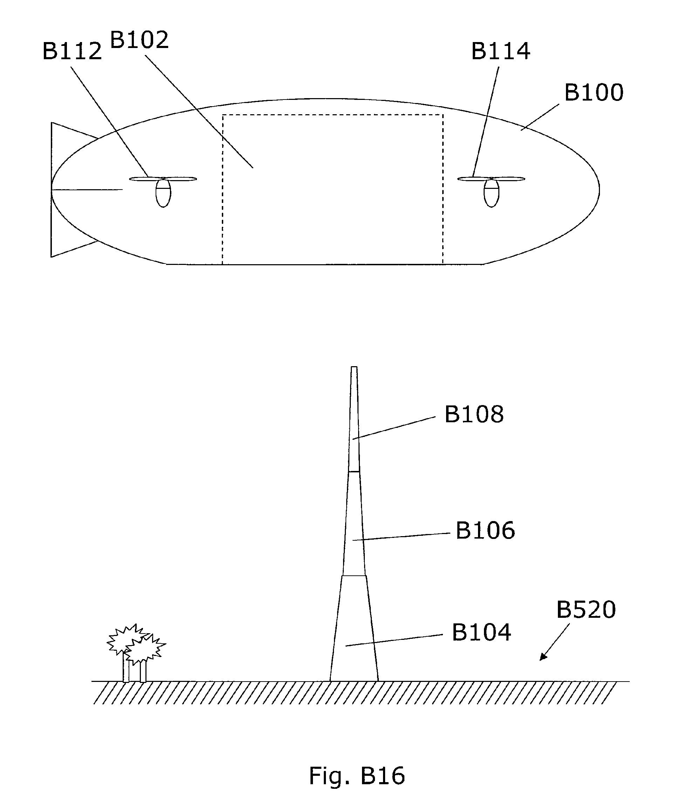

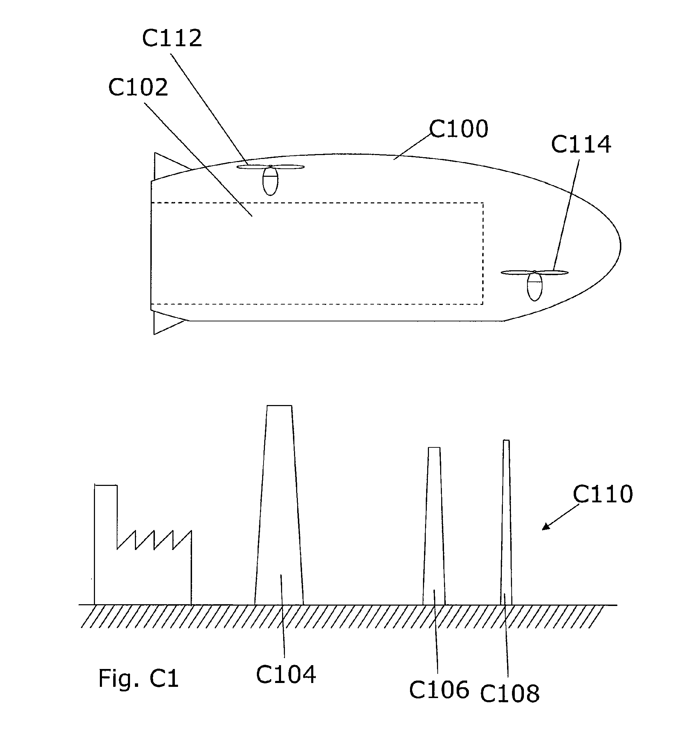

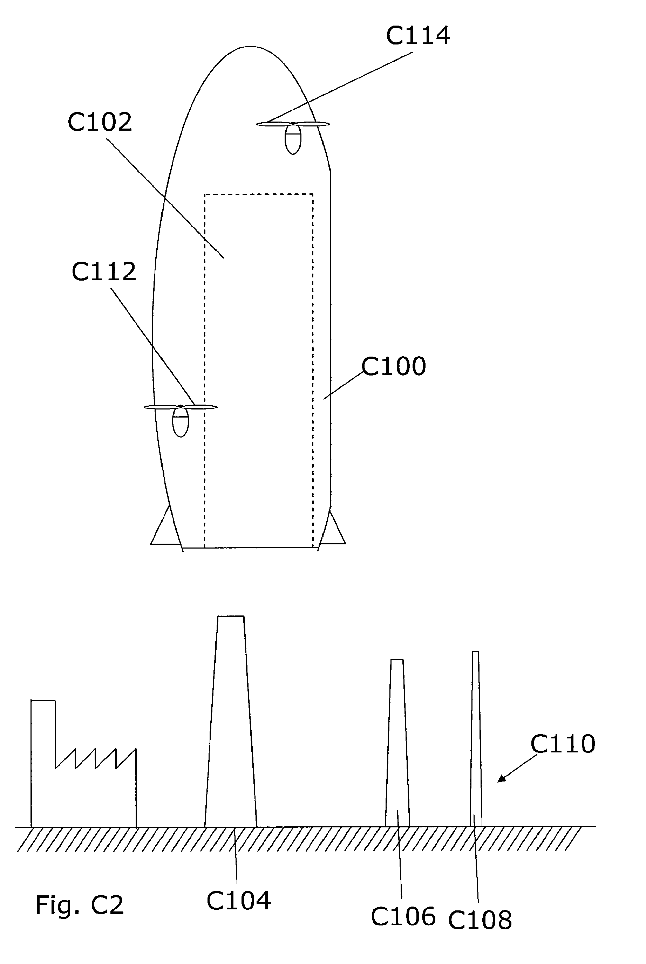

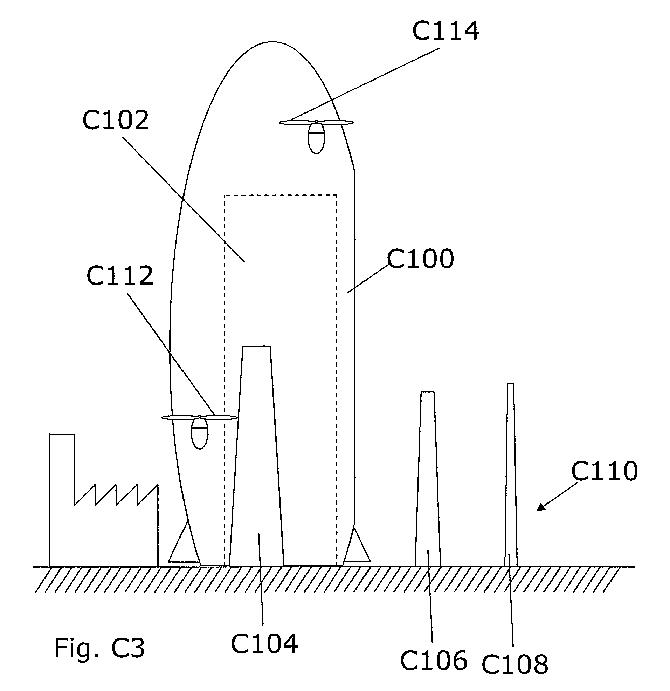

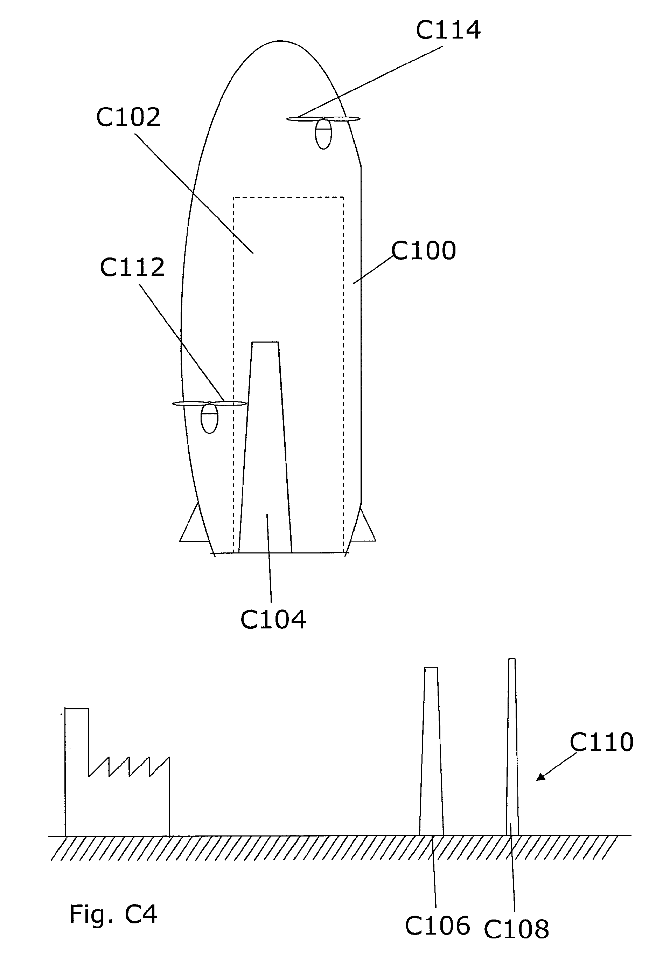

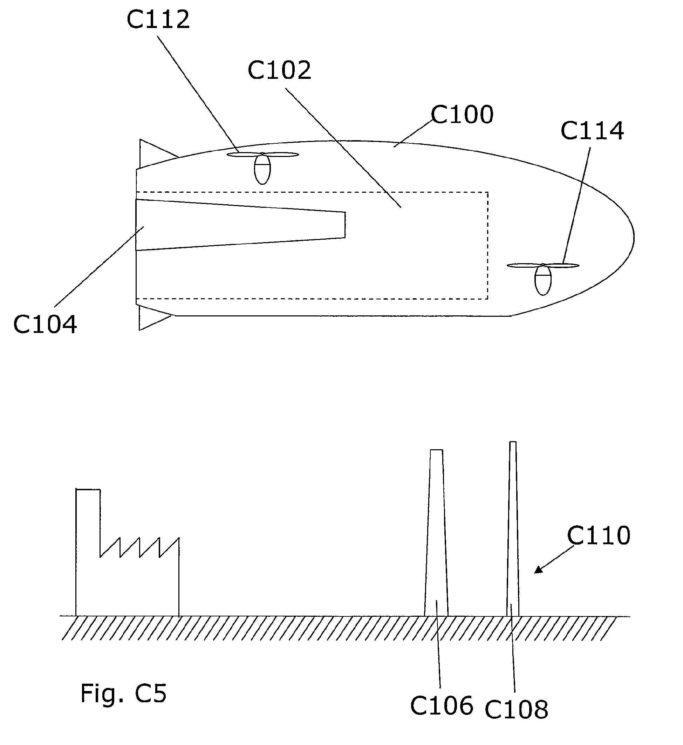

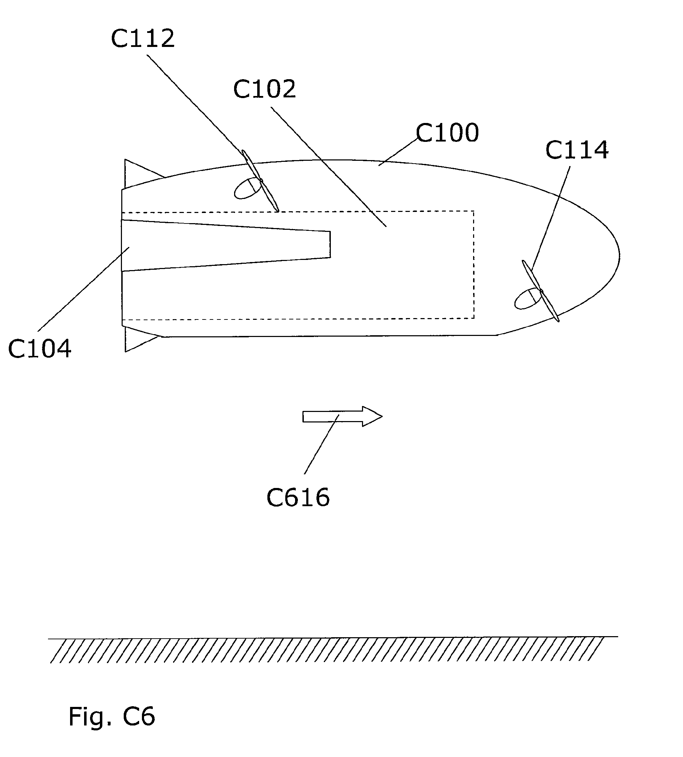

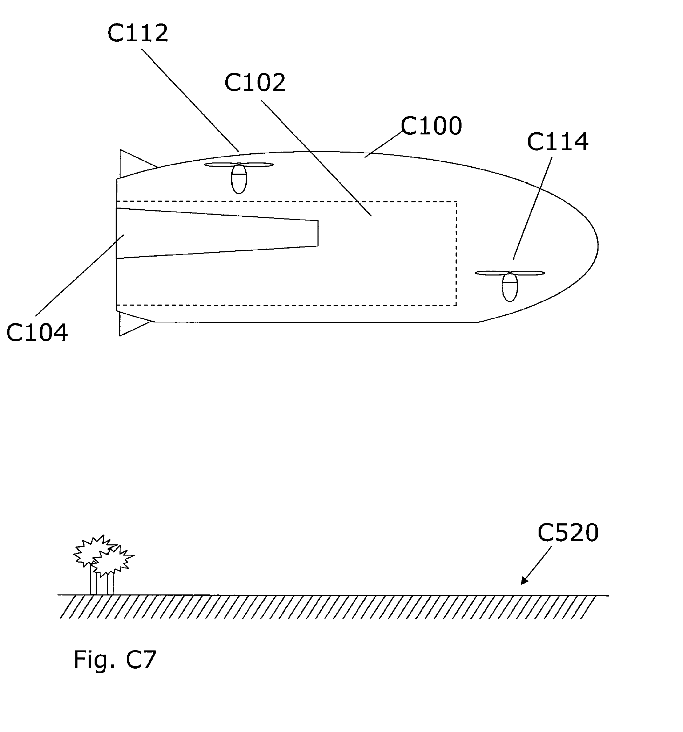

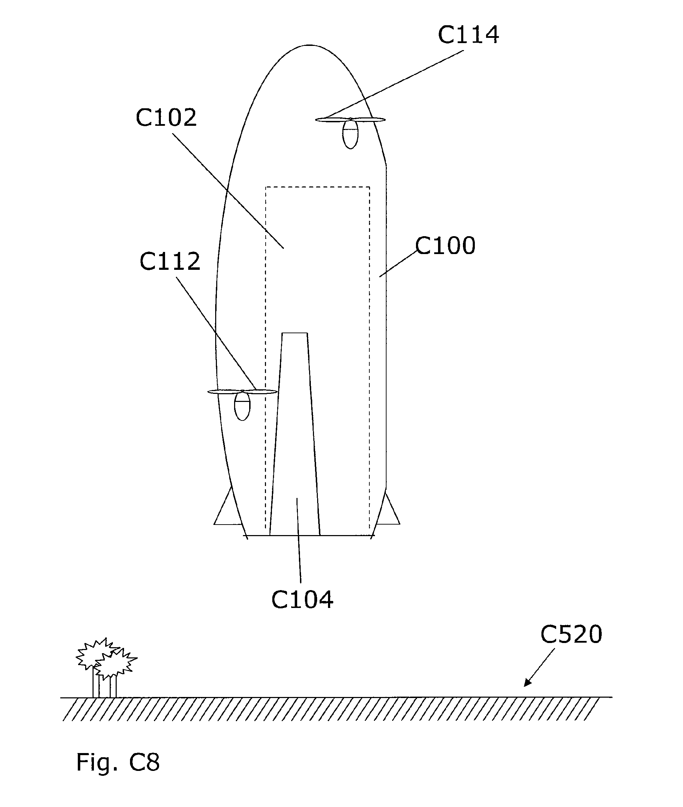

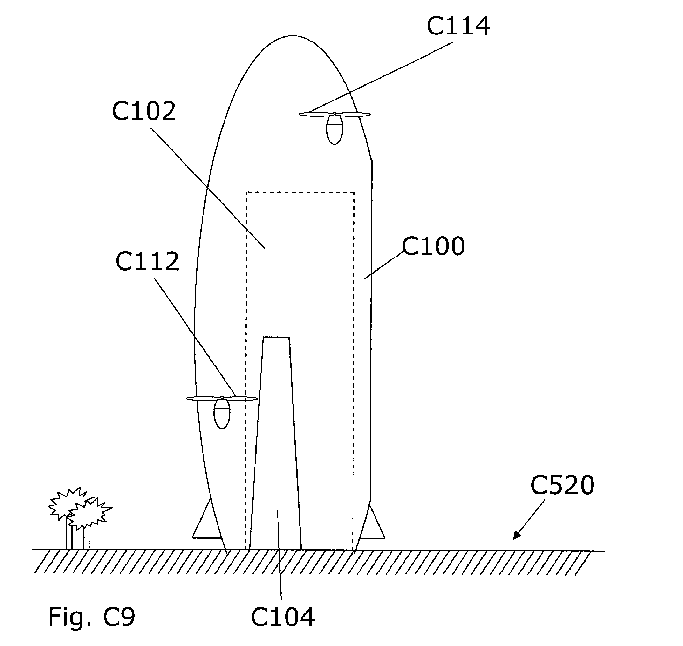

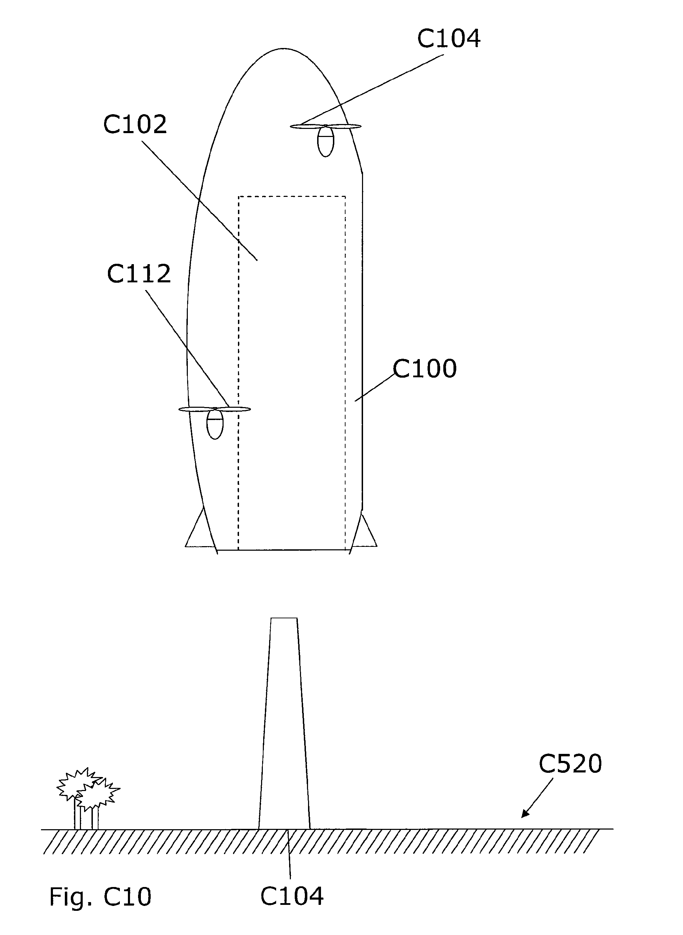

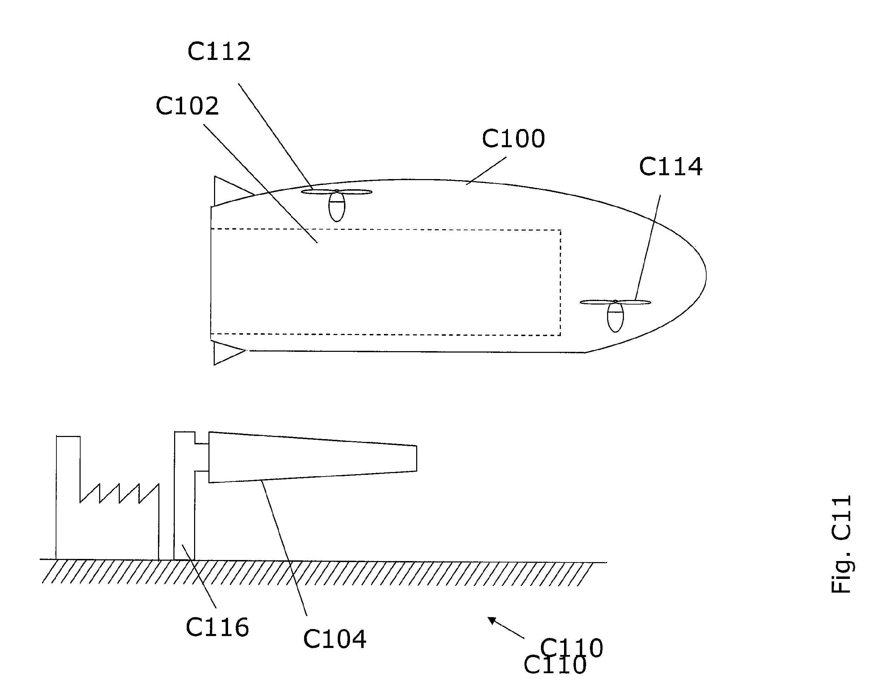

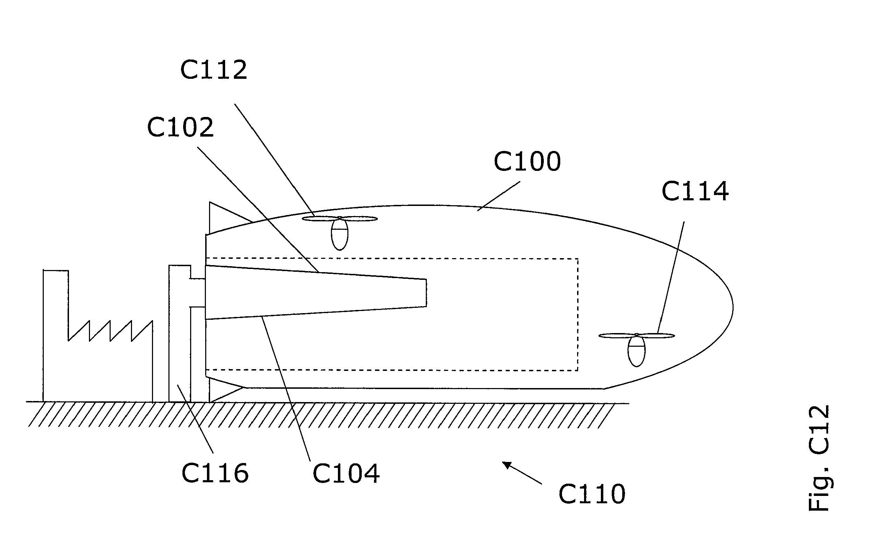

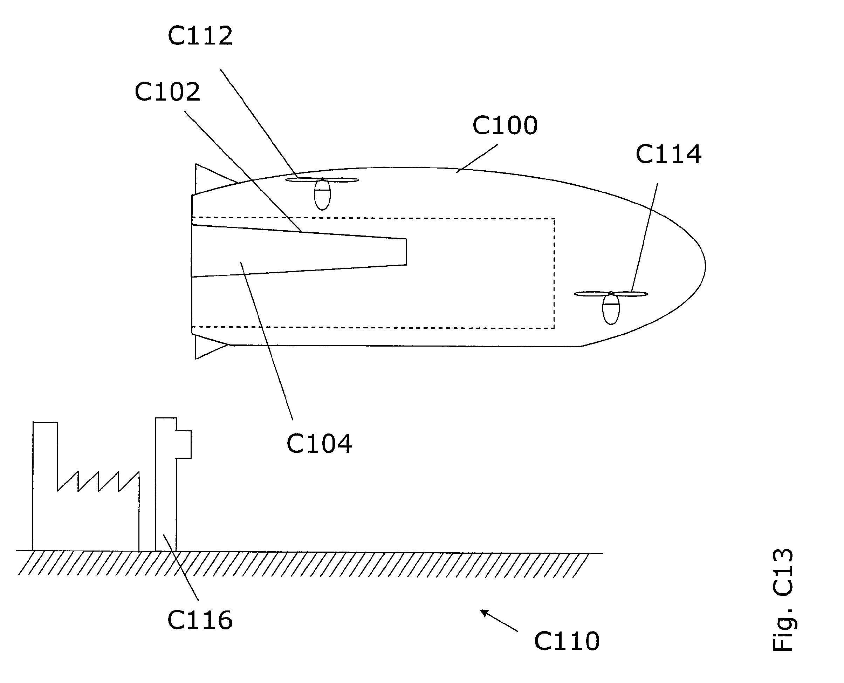

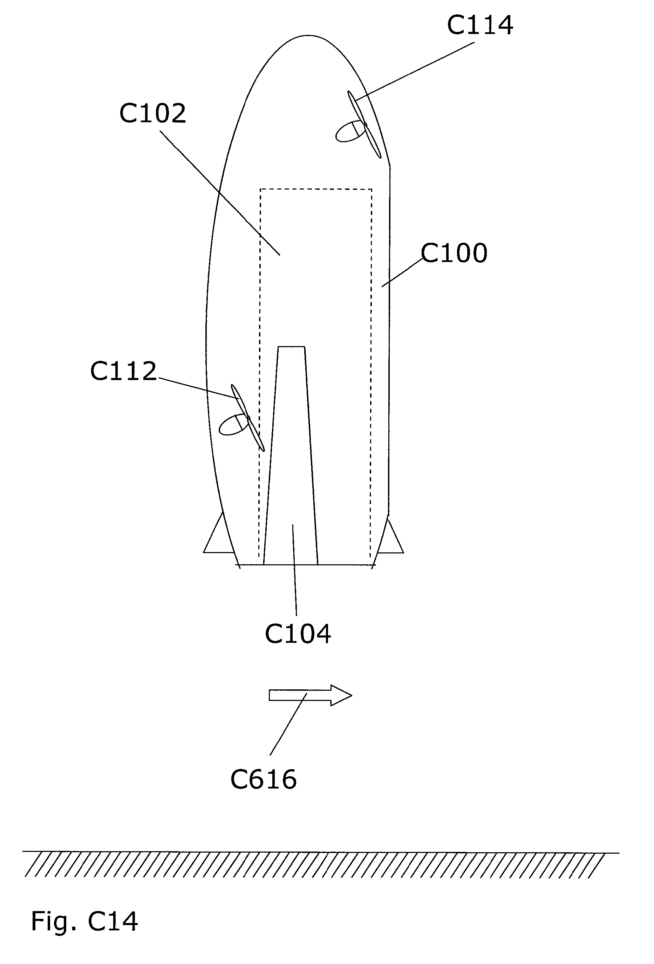

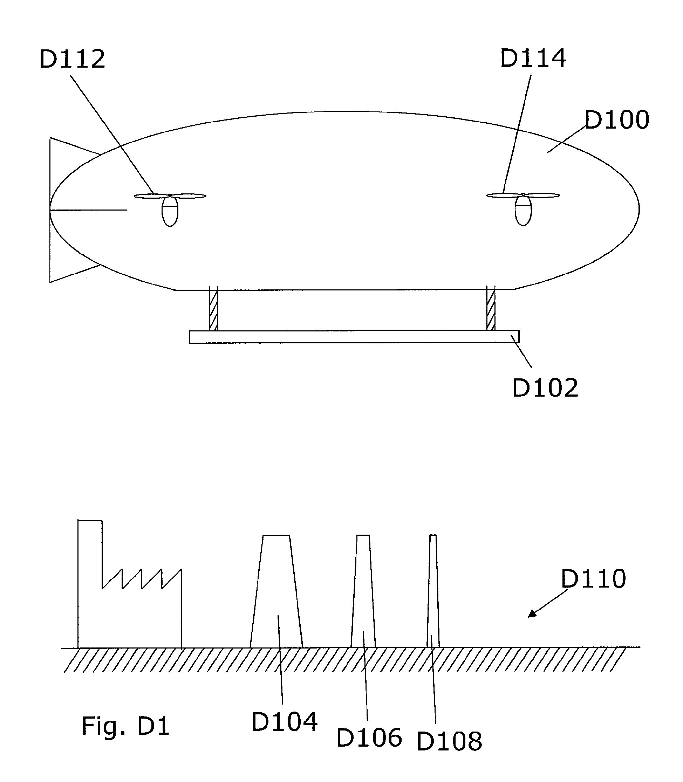

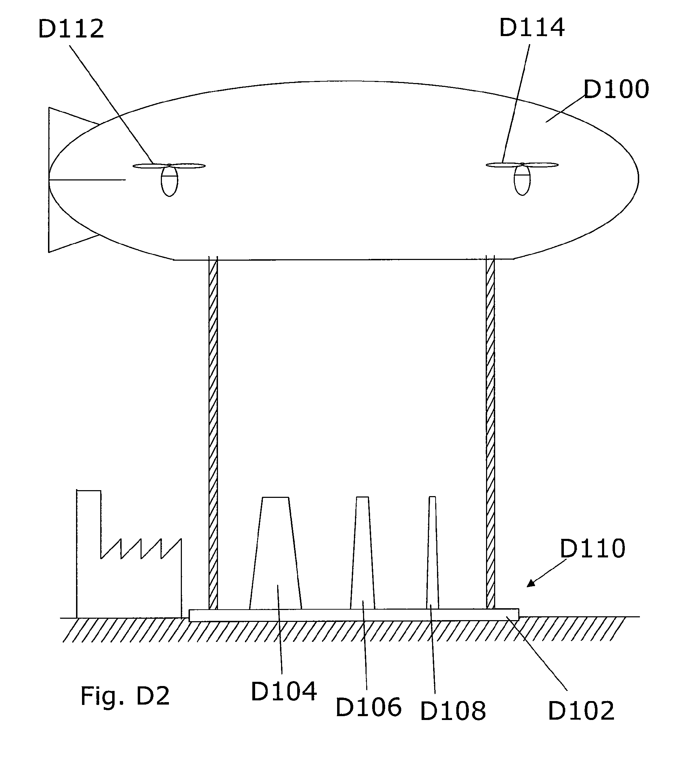

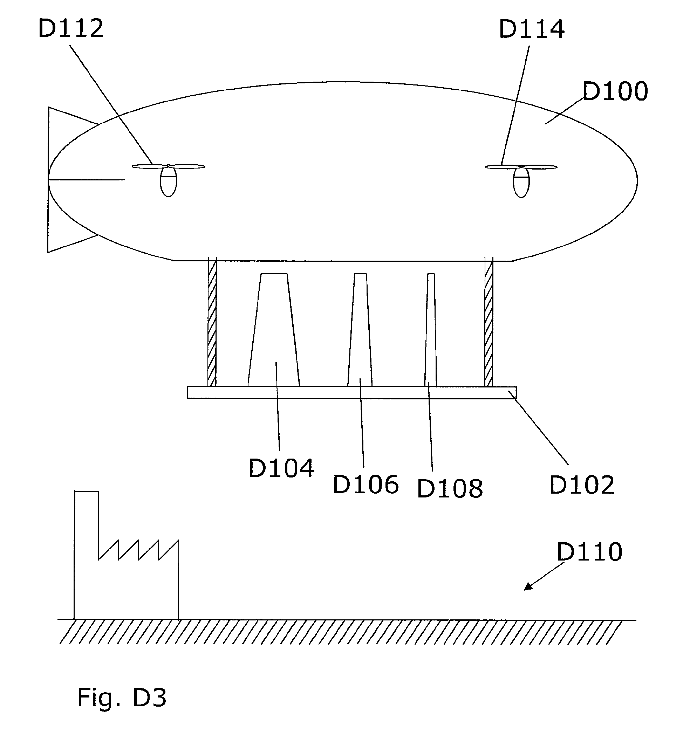

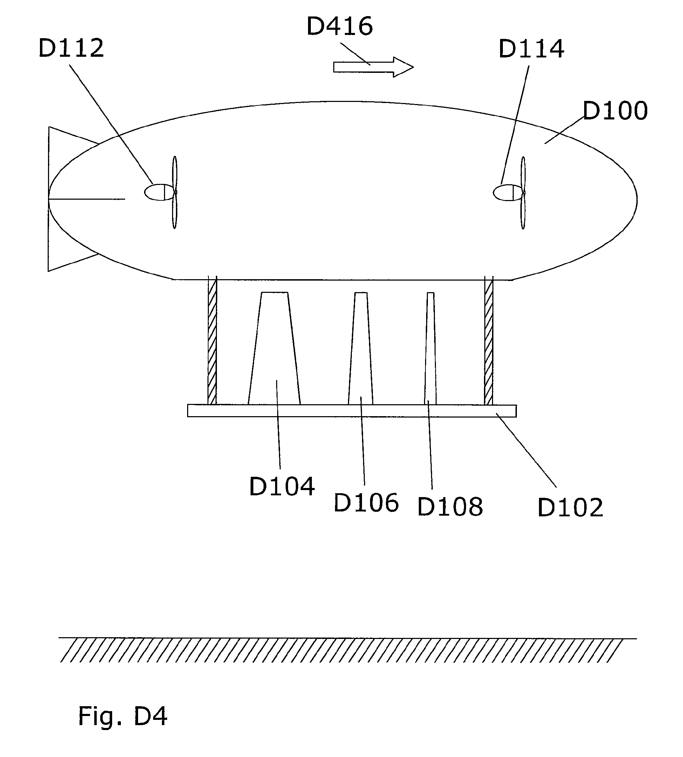

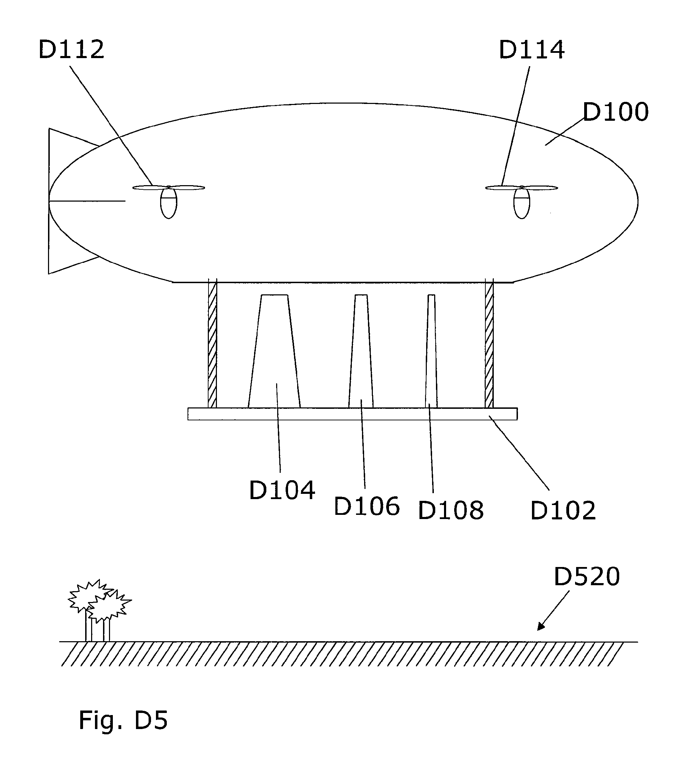

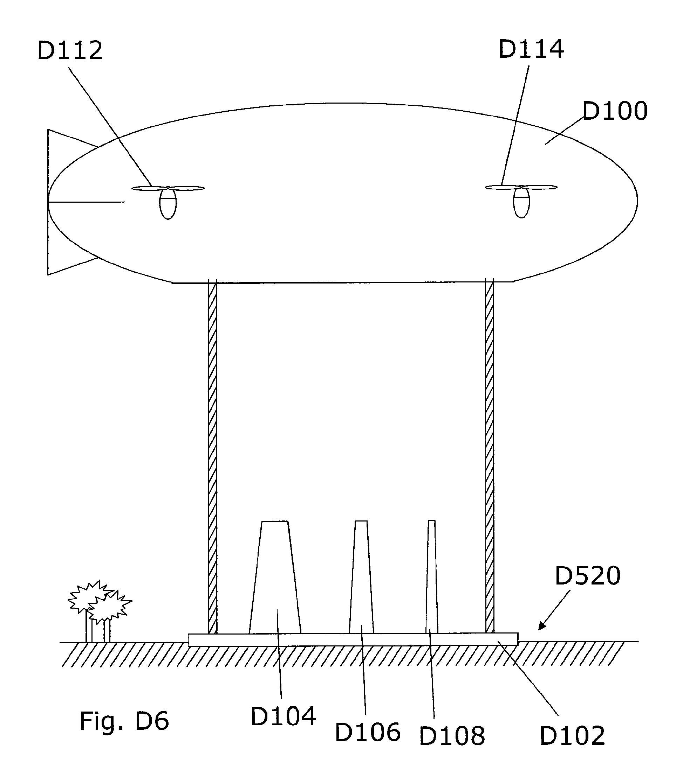

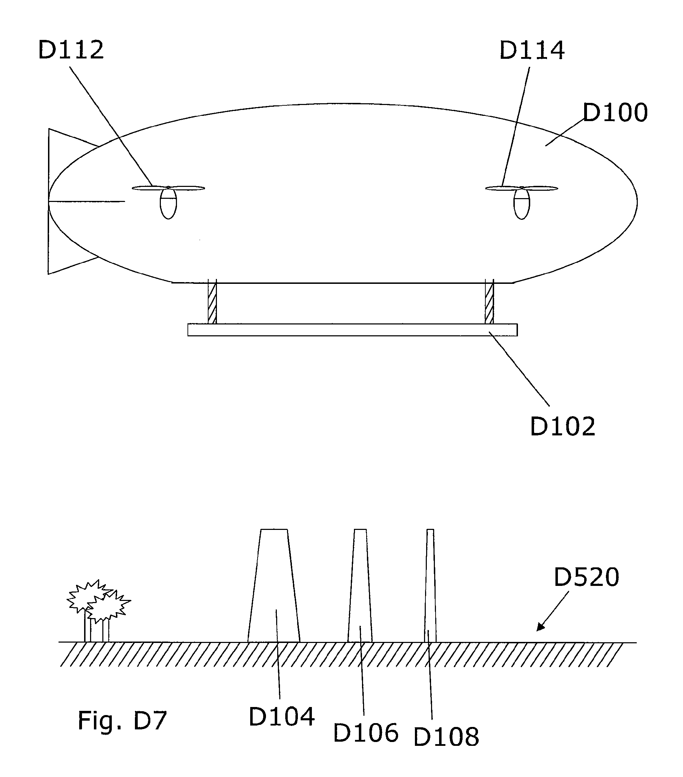

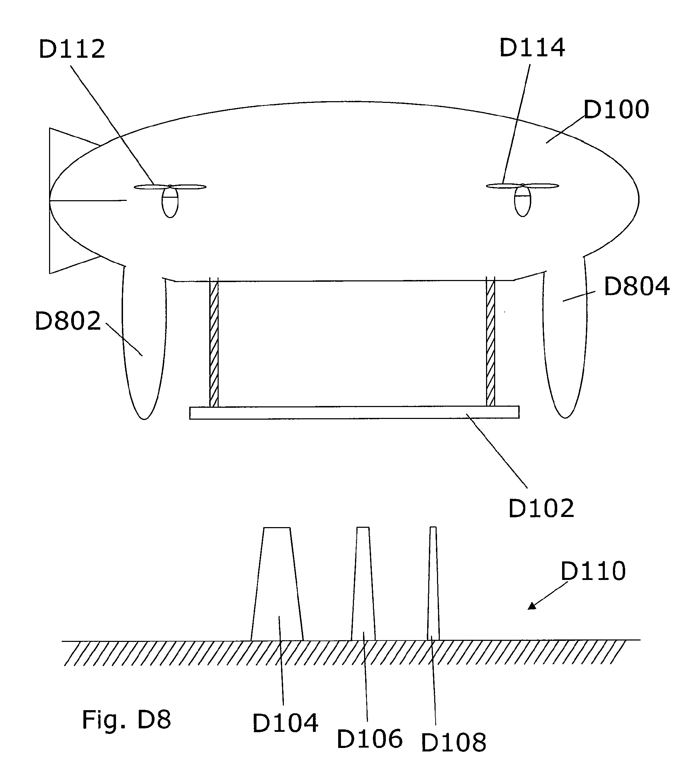

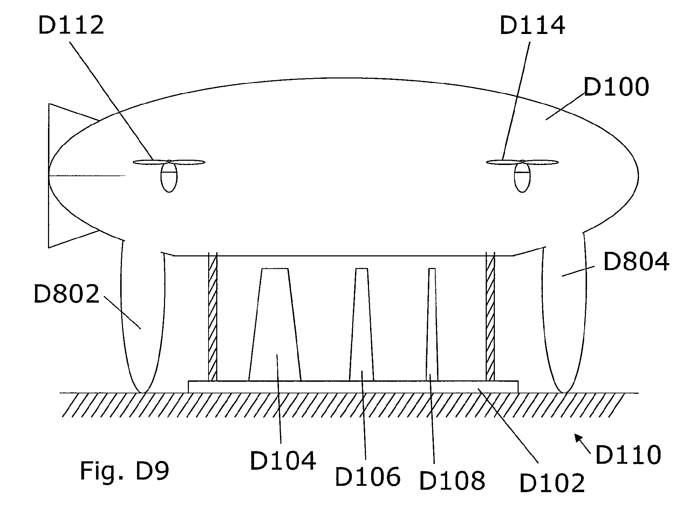

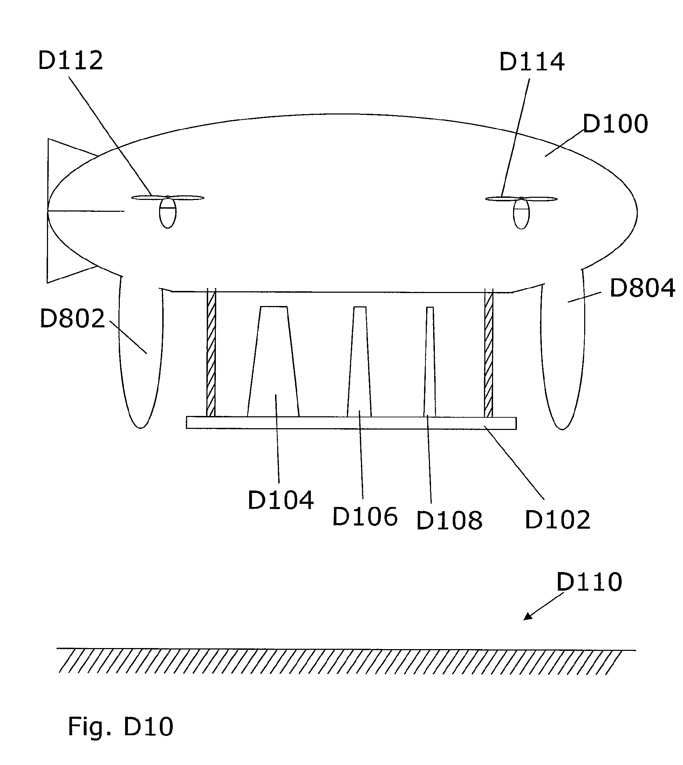

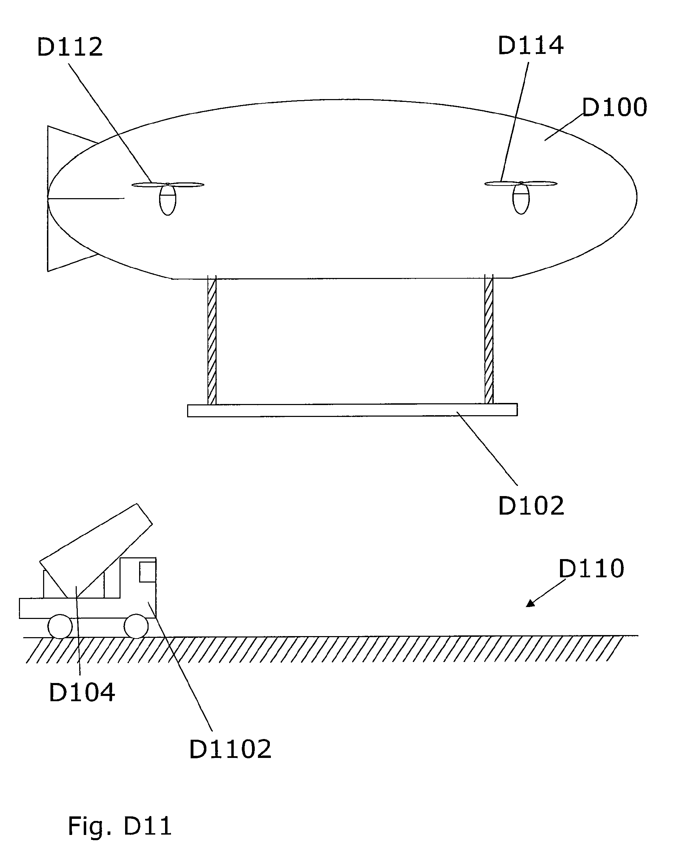

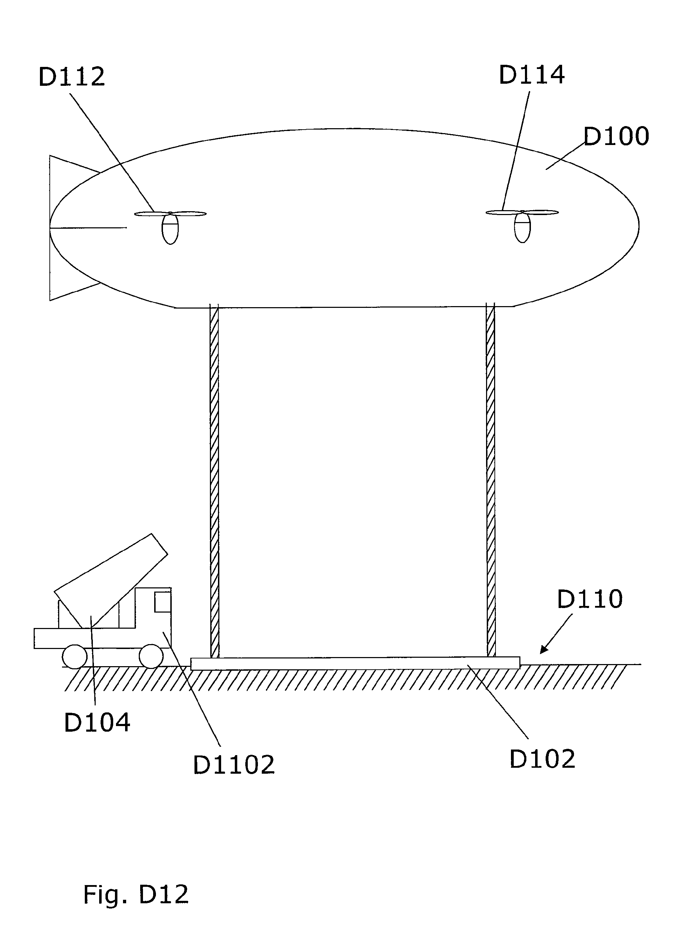

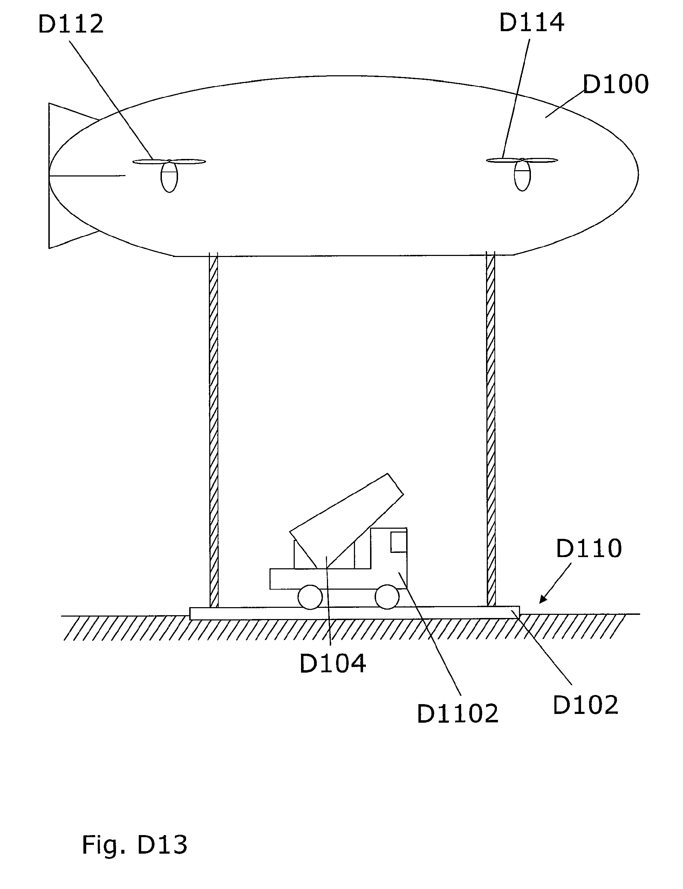

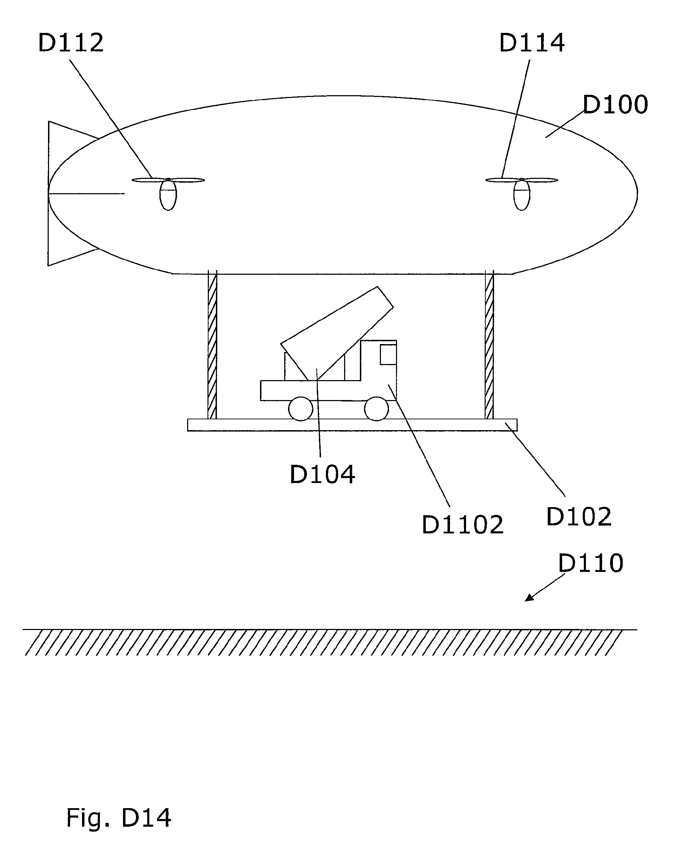

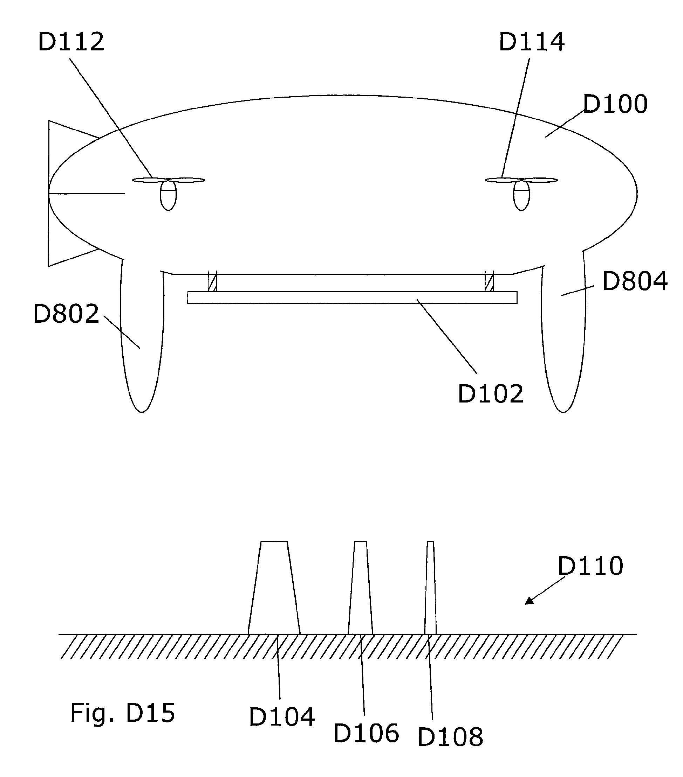

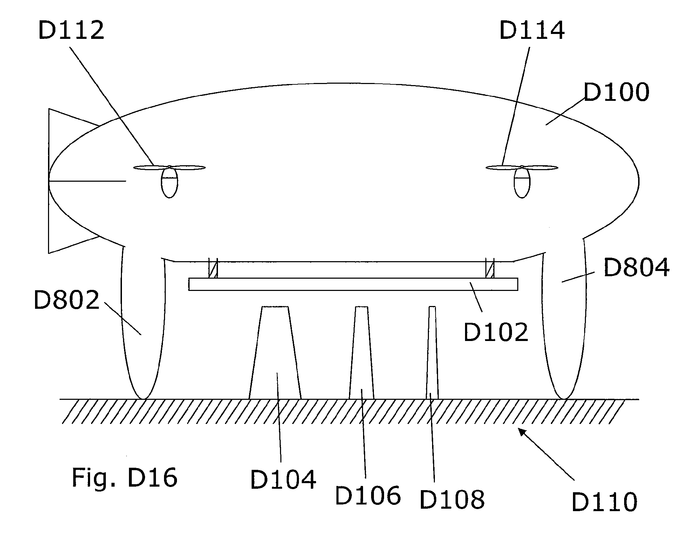

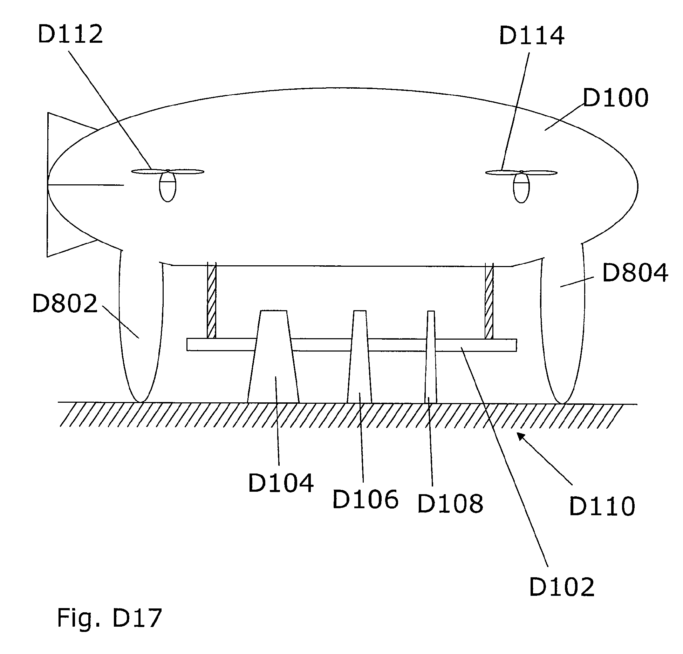

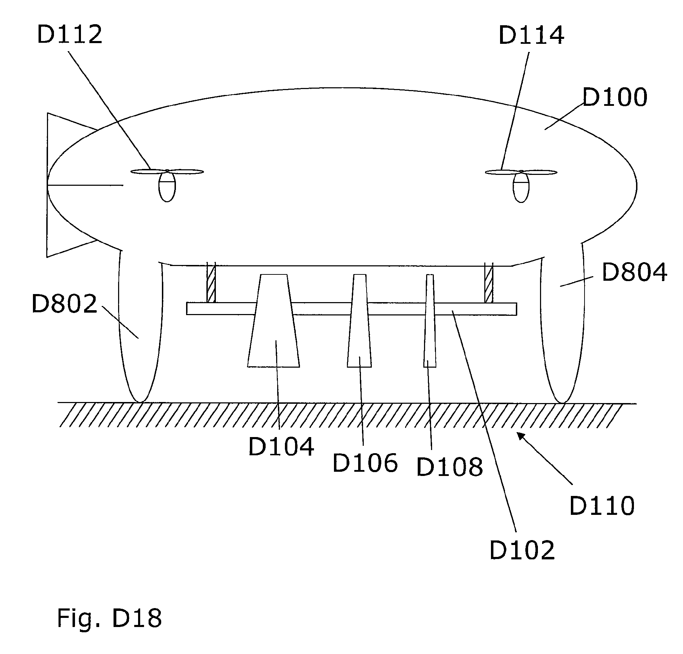

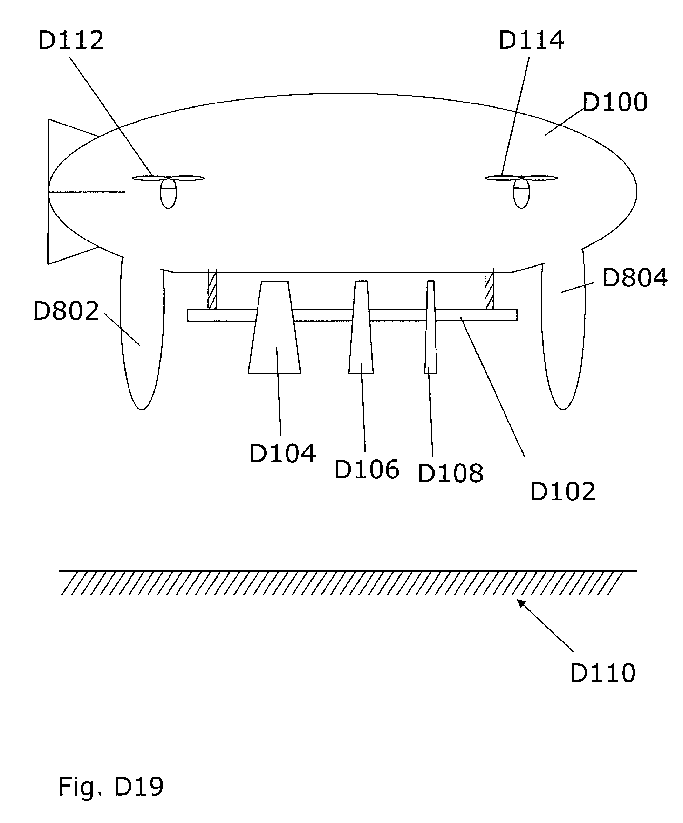

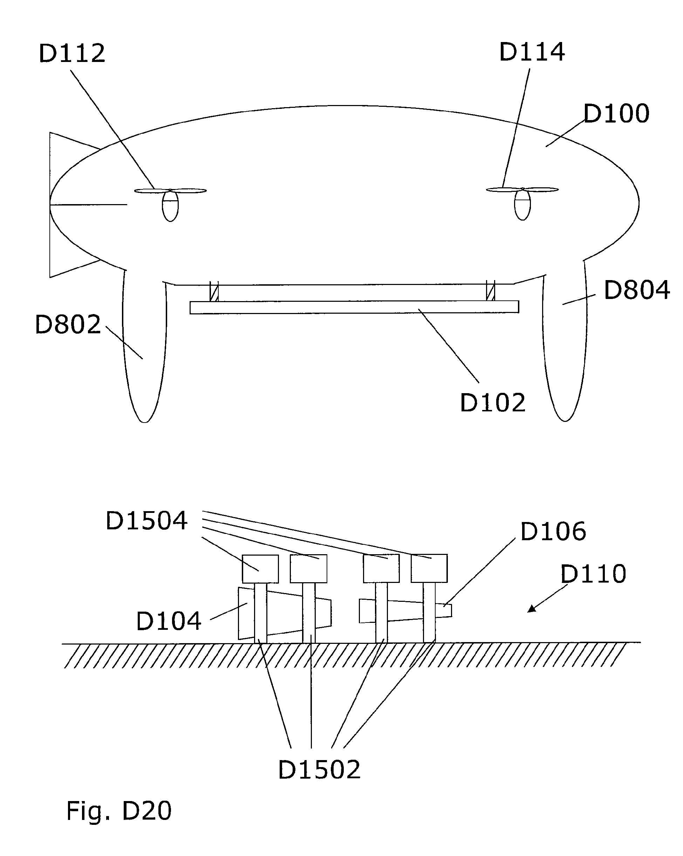

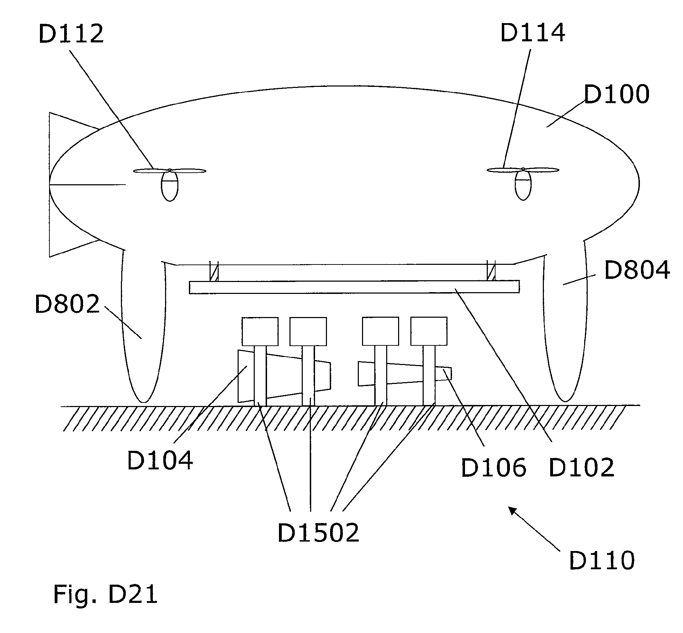

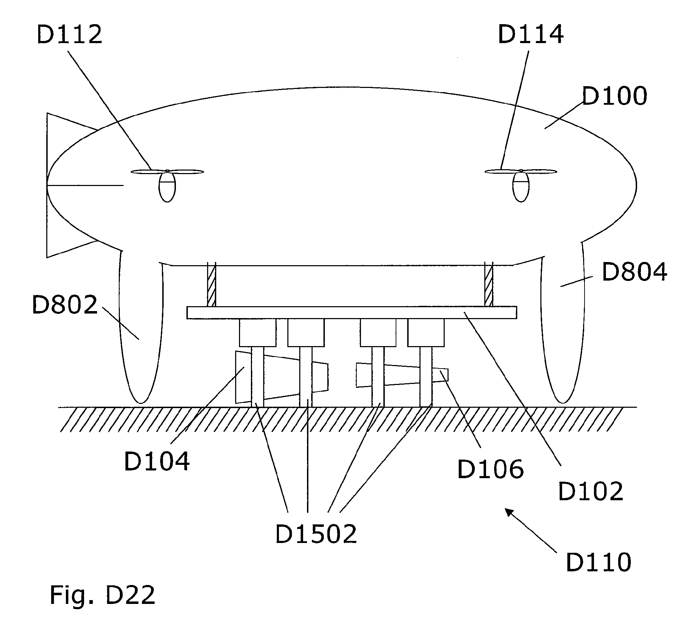

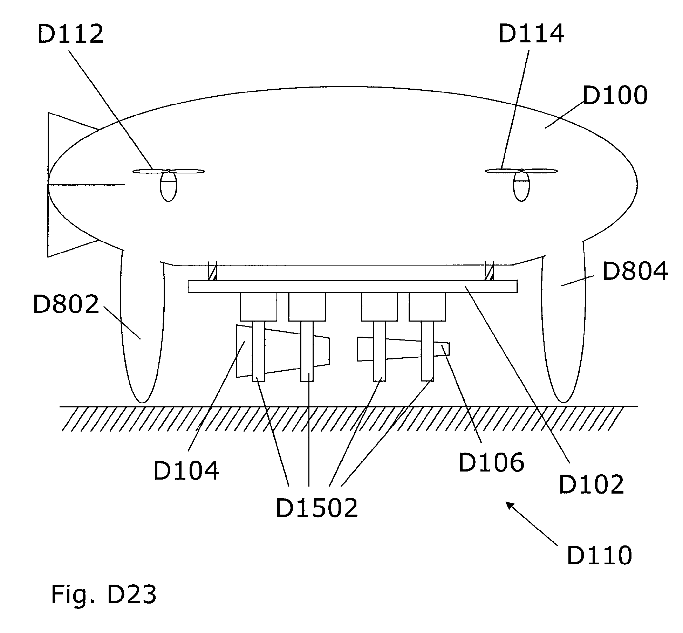

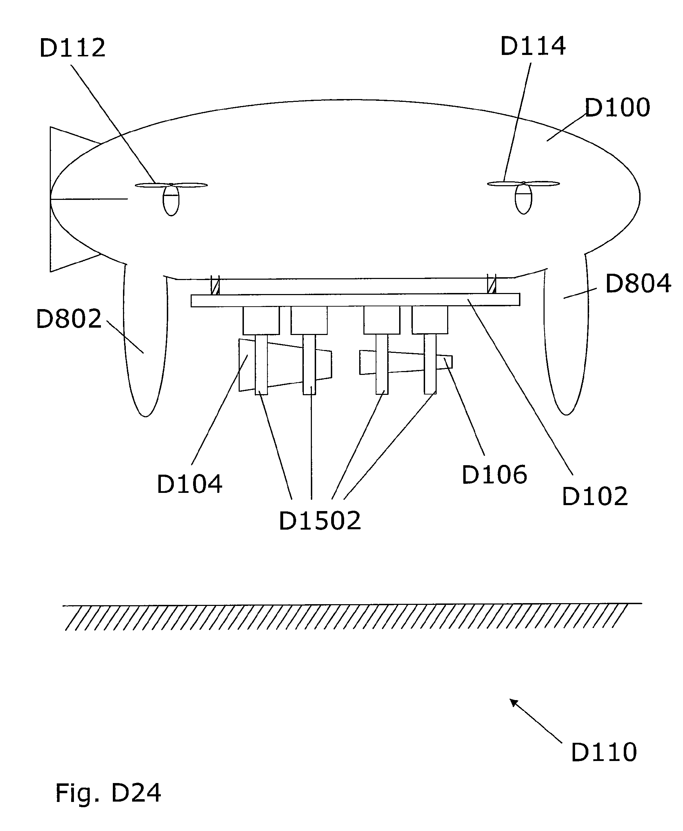

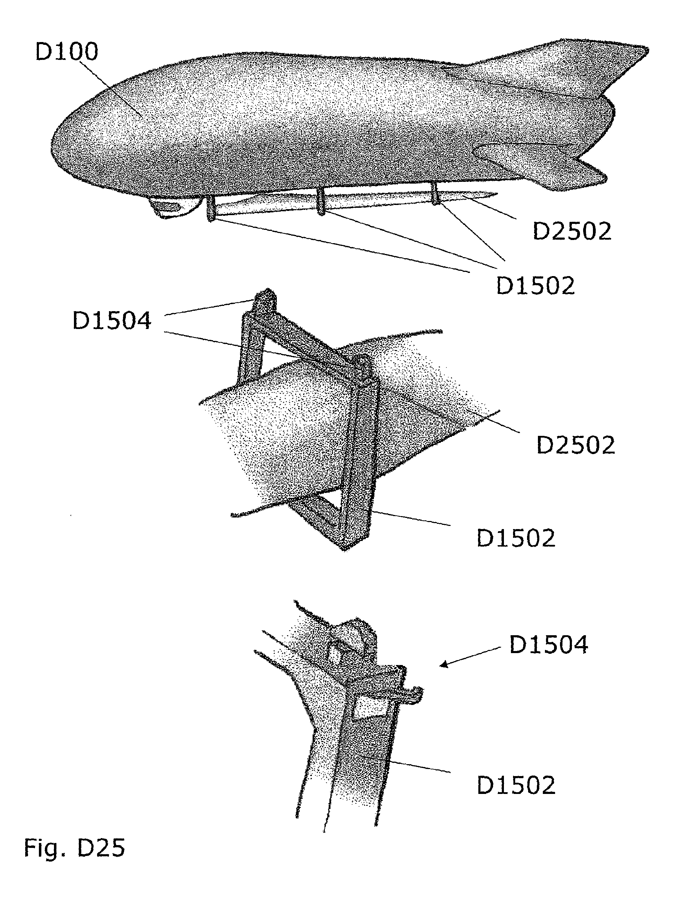

Fig. D25 shows a possible embodiment of use and function of a frame D1502 for enclosing a wind turbine tower element. Fig. 25 shows the frame D1502 at least partly enclosing a wind turbine blade D2502. The frame D1502 is a frame having connection elements D1504 for connecting the frame to the airship D100, and preferably also having connection elements for connecting the frame to a truck, and/or to a ship.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A method for handling at least one piece of equipment for installing a wind turbine generator component, said method comprising the steps of
- loading said at least one wind turbine generator component to an airship at a site of loading, said site of loading being different than a site of unloading the at least on piece of equipment for installing
- transporting the airship with the at least one piece of equipment from the site of loading of the at least one piece of equipment to the site of unloading the at least one piece of equipment
- unloading said at least one piece of equipment from the airship at the site of unloading.

2. A method according to claim 1, said method comprising the steps of
- enclosing, fully or partly, said at least one piece of equipment into at least one frame at a site of packaging, said at least one frame being provided with an attachment mechanism,
- loading said at least one piece of equipment to an airship at a site of loading by attaching said at least one frame by means of a complementary attachment mechanism of a cargo platform of the airship
- transporting the airship with the at least one piece of equipment enclosed in said at least one frame from the site of loading of the at least one piece of equipment being enclosed in the at least one frame to a site of unloading,
- unloading said at least one frame with from the cargo platform of the airship at the site of unloading with said at least one piece of equipment being enclosed in the at least one frame.

3. A method according to claim 1 or claim 2, said method comprising the steps of
- positioning an airship with a major axis or major plane of the airship directed upwards, said positioning being performed at least at one of the following sites or situations: before loading of the at least one piece of equipment to the airship at a site of loading, during transport of the at least one piece of equipment between the site of loading and the site of unloading, or before unloading of the at least one piece of equipment from the airship at the site of unloading.

4. A method according to claim 3, where the major axis or major plane of the airship is directed upwards during loading, loading said at least one piece of equipment to the upright airship at a site of loading, said site of loading being different than a site of unloading the at least one piece of equipment,

5. A method according to claim 3 or claim 4, where the major axis or major plane of the airship is directed upwards during transport of the airship with the at least one piece of equipment from the site of loading of the at least one piece of equipment to the site of unloading the at least one piece of equipment,

6. A method according to any of claims 3-5, where the major axis or major plane of the airship is directed upwards during unloading, unloading said at least one piece of equipment from the upright airship at the site of unloading.

7. A method according to any of claims 1-6, said method comprising the steps of
- loading said plurality wind turbine generator tower sections to an airship with a central axis of the plurality of wind turbine generator tower sections extending substantially upright when being loaded onto the airship
- said loading of the plurality of wind turbine generator tower sections being performed by enclosing the plurality of wind turbine generator tower sections in a cargo hold provided in the airship, said cargo hold having an aperture facing downwards
- transporting the airship with the plurality of wind turbine generator tower sections from a site of loading of the plurality of wind turbine generator tower sections to a site of installation of the plurality of wind turbine generator tower sections
- unloading said plurality of wind turbine generator tower sections from the airship in a substantially upright position with a central axis of the plurality of wind turbine generator tower sections extending upright when being unloaded to the site of installation.

8. A method according to any of claims 1-7, where said handling is one of the following operations: transporting at least one piece of equipment, installing at least one piece of equipment, or servicing at least one piece of equipment.

9. A method according to any of claims 1-8, where the site of loading to the airship or the site of unloading from the airship is one of the following sites: a site of manufacturing the at least one wind turbine component, a site of installation of the at least one wind turbine component, a harbour for loading and/or unloading wind turbine components to or from a ship, a storage area for loading and/or unloading wind turbine components to or from a truck, an airfield for loading and/or unloading wind turbine components to or from an aeroplane, a railway station for loading and/or unloading wind turbine components to or from a train, or a nacelle of a wind turbine.

10. A method according to any of claims 1-9, where the site of loading or unloading is one of the flowing geographical locations: a field, a mountain side, a roof-top of a land-based building, a land-based pylon, an off-shore pylon, an off-shore platform, an off-shore oil drilling rig, a jetty, a breakwater, or a water powered off-shore plant.

11. A method according to any of claims 1-9, where the site of loading or unloading is one of the following vessels or vehicles: a truck, a crane, a train, a ship, or a barge.

12. A method according to any of claims 1-11, where the at least one piece of equipment is one or more of the following wind turbine generator components: a wind turbine blade, a wind turbine tower section, a complete wind turbine tower, a wind turbine nacelle, a wind turbine hub, a wind turbine foundation, a wind turbine generator, a wind turbine gear box, a wind turbine transformer, a wind turbine rectifier, a wind turbine inverter, a wind turbine bunny comprised of the hub and two wind turbine blades extending obliquely upwards, or one or more moulds for producing wind turbine components such as wind turbine blades.

13. A method according to any of claims 1-12, where a distance between the site of loading the at least one wind turbine component to the airship and the site of unloading the at least one piece of equipment from the airship is at least 10 m, preferably at least 100 m, possibly at least 1 km, possibly at least 10 km, possibly at least 50 km, possibly more than 100 km.

14. A method according to any of claims 1-13, where an average height of the piece of equipment during the step of transporting the airship with the at least one piece of equipment from the site of loading of the at least one piece of equipment to the site of installation of the at least one piece of equipment is at least 100 m above ground level or sea level, preferably at least 250 m above ground level or sea level, possibly more than 500 m above ground level or sea level.

15. A method according to any of claim 1-14, where an average speed of the airship during the step of transporting the airship with the at least one piece of equipment from the site of loading of the at least one piece of equipment to the site of installation of the at least one piece of equipment is at least 10 km/hour in relation to the ground or the sea, preferably at least 50 km/hour in relation to the ground or the sea, possible more than 100 km/hour in relation or the ground or the sea, possibly even more than 200 km/hour in relation to the ground or the sea.

16. A method according to any of claims 1-15, where the step of loading said at least one piece of equipment to the airship at the site of loading is performed by the airship being lowered towards the ground or sea to a position above the equipment, and that the at least one piece of equipment is attached to the airship when the airship is in the lowered position above the equipment without hoisting the equipment to the airship.

17. A method according to any of claims 1-15, where the step of loading said at least one piece of equipment to the airship at the site of loading is performed by the airship being positioned above the ground or sea to a position above the equipment, and that the at least one piece of equipment is attached to the airship when the airship is in the position above the equipment by hoisting the equipment to the airship.

18. A method according to any of claims 1-17, where the step of unloading said at least one piece of equipment from the an airship at the site of unloading is performed by the airship being lowered towards the ground or sea at a position for unloading the equipment, and that the at least one piece of equipment is detached from the airship when the airship is in the lowered position above the ground or sea without hoisting the equipment from the airship.

19. A method according to any of claims 1-17, where the step of unloading said at least one piece of equipment from the an airship at the site of unloading is performed by the airship being positioned above the ground or sea at a position for unloading the equipment, and that the at least one piece of equipment is detached from the airship when the airship is in the position above the ground or sea by hoisting the equipment from the airship.

20. Use of an airship for handling at least one piece of equipment for installing a wind turbine generator, said piece of equipment being one of the following pieces of equipment: a complete wind turbine generator, components of a wind turbine generator or equipment other than components of a wind turbine generator.
